# EUROPÄISCHE PATENTSCHRIFT

(11) **EP 2 883 018 B1**
(45) Veröffentlichungstag und Bekanntmachung des Hinweises auf die Patenterteilung: **01.05.2019**
(21) Anmeldenummer: 13747382.3
(22) Anmeldetag: 07.08.2013
(51) Int. Cl.: G01B 11/00, G02B 15/167

(54) **KOORDINATENMESSGERÄT ZUR BESTIMMUNG VON RAUMKOORDINATEN AN EINEM MESSOBJEKT**
COORDINATE MEASURING DEVICE FOR DETERMINING SPATIAL COORDINATES OF A MEASUREMENT OBJECT
APPAREIL DE MESURE DE COORDONNÉES POUR DÉTERMINER DES COORDONNÉES SPATIALES SUR UN OBJET À MESURER

(30) Priorität: 07.08.2012 WO PCT/EP2012/065396
(43) Veröffentlichungstag der Anmeldung: 17.06.2015
(73) Patentinhaber: Carl Zeiss Industrielle Messtechnik GmbH, 73447 Oberkochen (DE)
(72) Erfinder: WINTEROT, Johannes, 07745 Jena (DE); ENGEL, Thomas, 73432 Aalen (DE)
(74) Vertreter: Witte, Weller & Partner Patentanwälte mbB
(86) Internationale Anmeldenummer: PCT/EP2013/066575
(87) Internationale Veröffentlichungsnummer: WO 2014/023780

(56) Entgegenhaltungen:
- WO-A2-2004/040234
- DE-A1- 19 816 270
- US-A1- 2005 007 480
- US-A1- 2009 128 924

## Beschreibung

Die vorliegende Erfindung betrifft ein Koordinatenmessgerät zur Bestimmung von Raumkoordinaten an einem Messobjekt, mit einer Werkstückaufnahme zur Aufnahme des Messobjekts, mit einem Messkopf, der relativ zu der Werkstückaufnahme verfahrbar ist und einen optischen Sensor trägt, und mit einer Auswerte- und Steuereinheit, die dazu ausgebildet ist, Raumkoordinaten an dem Messobjekt in Abhängigkeit von einer Position des Messkopfes relativ zu der Werkstückaufnahme und in Abhängigkeit von Sensordaten des optischen Sensors zu bestimmen, wobei der optische Sensor ein Objektiv und eine Kamera beinhaltet, die dazu ausgebildet ist, ein Bild des Messobjekts durch das Objektiv aufzunehmen, wobei das Objektiv einen Objektivkörper aufweist, der eine Lichteintrittsöffnung und eine Lichtaustrittsöffnung mit einer Schnittstelle zum Anschluss der Kamera besitzt, wobei das Objektiv ferner eine Blende und eine Vielzahl von Linsen aufweist, die in dem Objektivkörper angeordnet sind, wobei die Linsen mindestens vier separate Linsengruppen bilden, die zusammen eine optische Achse definieren, und wobei mindestens drei der mindestens vier Linsengruppen entlang der optischen Achse verschiebbar sind, wobei eine erste Linsengruppe von den mindestens vier Linsengruppen im Bereich der Lichteintrittsöffnung feststehend angeordnet ist.

Die Erfindung betrifft ferner ein Verfahren zur Bestimmung von Raumkoordinaten an einem Messobjekt, mit den Schritten:
- Anordnen des Messobjekts auf einer Werkstückaufnahme,
- Bereitstellen eines Messkopfes, der ein Objektiv und eine Kamera beinhaltet, wobei das Objektiv einen Objektivkörper aufweist, der eine Lichteintrittsöffnung und eine Lichtaustrittsöffnung mit einer Schnittstelle zum Anschluss der Kamera besitzt,
- Positionieren des Messkopfes relativ zu der Werkstückaufnahme,
- Aufnehmen von zumindest einem Bild des Messobjekts durch das Objektiv, und
- Bestimmen der Raumkoordinaten an dem Messobjekt in Abhängigkeit von der Position des Messkopfes relativ zu der Werkstückaufnahme und in Abhängigkeit von dem Bild,
wobei das Objektiv eine Blende und eine Vielzahl von Linsen aufweist, die in dem Objektivkörper angeordnet sind, wobei die Linsen mindestens vier separate Linsengruppen bilden, die zusammen eine optische Achse definieren, wobei eine erste Linsengruppe von den mindestens vier Linsengruppen im Bereich der Lichteintrittsöffnung feststehend angeordnet ist, und wobei mindestens drei der mindestens vier Linsengruppen entlang der optischen Achse verschiebbar sind.

Ein Koordinatenmessgerät mit mindestens zwei verschiebbaren Linsengruppen und entsprechendes Verfahren sind in WO 2004/040234 A2 beschrieben.

Dieses Dokument beschreibt ein Koordinatenmessgerät mit einer Kamera und einem Objektiv, welches zwei verschiebbare Linsengruppen und zwei feststehende Linsengruppen besitzt. Die verschiebbaren Linsengruppen dienen zum Einstellen des Abbildungsmaßstabes und/oder des Arbeitsabstandes, insbesondere in Form einer Zoomoptik. Zusätzlich zu den verschiebbaren Linsenbaugruppen kann eine verschiebbare Blende integriert sein, die ein telezentrisches optisches System realisiert. Eine Besonderheit dieses bekannten Koordinatenmessgerätes liegt darin, dass in zumindest einigen der mechanischen Aufnahmen für die Linsengruppen weitere Linsen zum separaten Abbilden eines Lichtstrahls auf das Objekt angeordnet sind. Der Beleuchtungsstrahlengang und der Beobachtungsstrahlengang verlaufen parallel.

EP 1 071 922 B1 offenbart ein weiteres Koordinatenmessgerät und ein entsprechendes Verfahren. Das bekannte Koordinatenmessgerät besitzt ein Tastelement, das vorzugsweise am Ende einer biegeelastischen Lichtleitfaser angeordnet ist. Das Tastelement dient dazu, einen Messpunkt an einem Messobjekt zu berühren. Mit Hilfe eines optischen Sensors, der eine Kamera und ein Objektiv beinhaltet, können Auslenkungen des Tastelements beim Antasten des Messobjekts detektiert werden. Anhand der Auslenkung des Tastelements und gegebenenfalls anhand der Position des optischen Sensors relativ zu dem Messobjekt können dann Raumkoordinaten für den angetasteten Messpunkt bestimmt werden. Alternativ soll das bekannte Koordinatenmessgerät die Möglichkeit bieten, die Oberflächentopographie eines Messobjekts ohne Tastelement, d.h. rein optisch, zu vermessen. EP 1 071 922 B1 schlägt vor, dass der optische Sensor eine Zoomoptik mit zwei Linsengruppen besitzt, die mit Hilfe von Motoren separat in Stellungen für den Abbildungsmaßstab und den Abstand zum Messobjekt bewegt werden. Dies soll es möglich machen, das Tastelement wahlweise aus dem Schärfentiefebereich der Optik herauszubringen, um eine rein optische Messung zu ermöglichen.

JP 2011-169661 offenbart ein optisches Messgerät mit einer Kamera und einem telezentrischen optischen System, das eine Frontlinse, eine rückseitige Linse und eine telezentrische Blende besitzt. Das Messgerät besitzt ferner ein laserbasiertes Autofokussystem, das mit Hilfe von Laserlicht eine Position des Messobjekts auf der optischen Achse des telezentrischen Systems bestimmt.

Die Verwendung von optischen Sensoren in Verbindung mit Koordinatenmessgeräten ermöglicht in vielen Fällen eine sehr schnelle Messung von geometrischen Eigenschaften eines Messobjekts. Ein Nachteil bekannter Koordinatenmessgeräte mit optischen Sensoren besteht bislang darin, dass die optischen Sensoren auf bestimmte Messaufgaben und bestimmte Werkstückeigenschaften begrenzt sind. Die optischen Sensoren sind in der Regel für eine bestimmte Art von Messaufgabe optimiert, etwa im Hinblick auf die erreichbare Messgenauigkeit oder den Messbereich. Probleme können beispielsweise Werkstücke machen, die große Höhendifferenzen in Richtung der optischen Achse des Sensors aufweisen. Teilweise werden verschiedene optische und/oder taktile Sensoren verwendet, um auf verschiedene Messanforderungen flexibel reagieren zu können, wobei die einzelnen Sensoren jeweils nur einen Teil der gesamten Messaufgabe übernehmen. In der Regel ist jeder einzelne Sensor auf eine bestimmte Messaufgabe hin optimiert. Vor allem optische Sensoren besitzen daher eine individuelle Optik, die jeweils für einen bestimmten Einsatzzweck gut geeignet und für andere Zwecke weniger gut geeignet ist.

Die Bereitstellung von verschiedenen Sensoren für unterschiedliche Messaufgaben in einem Koordinatenmessgerät ermöglicht eine hohe Flexibilität in Verbindung mit einer hohen Messgenauigkeit. Nachteil sind die hohen Kosten für die Bereitstellung der zahlreichen Sensoren mit jeweils an den Einsatzzweck des Sensors angepasster Optik. Des weiteren benötigen die vielen Sensoren mit jeweils eigener Optik einen relativ großen Bauraum im Koordinatenmessgerät, was das Messvolumen einschränkt und weitere Kosten verursacht.

Es besteht der Wunsch, ein optisches Koordinatenmessgerät bereitzustellen, das bei vergleichsweise geringen Kosten ein großes Spektrum an optischen Messaufgaben ausführen kann. Dementsprechend ist es eine Aufgabe der vorliegenden Erfindung, ein entsprechendes Koordinatenmessgerät und ein entsprechendes Verfahren anzugeben.

Gemäß einem Aspekt der vorliegenden Erfindung wird diese Aufgabe durch ein Koordinatenmessgerät gemäß Anspruch 1 gelöst.

Gemäß einem weiteren Aspekt wird die Aufgabe durch ein Verfahren gemäß Anspruch 14 gelöst.

Gemäß einem weiteren Aspekt wird diese Aufgabe durch ein Objektiv gemäß Anspruch 13 gelöst.

Das neue Koordinatenmessgerät besitzt ein Objektiv, bei dem zumindest vier separate, räumlich voneinander beabstandete Linsengruppen auf einer gemeinsamen optischen Achse angeordnet sind. Die erste Linsengruppe (von der Lichteintrittsöffnung bzw. Frontseite her gesehen) ist feststehend. Sie besitzt daher einen konstanten, definierten Abstand zu der Schnittstelle zum Anschluss der Kamera. In einigen Ausführungsbeispielen ist die Schnittstelle eine Standardschnittstelle zum Anschluss von Kameras, etwa ein so genannter C-Mount oder ein F-Mount. In anderen Ausführungsbeispielen ist die Schnittstelle eine proprietäre Schnittstelle, bei der die Kamera mit dem Objektivkörper verschraubt ist. Diese proprietäre Schnittstelle bietet eine höhere Stabilität und gewährleistet damit die Einhaltung einer hohen Messgenauigkeit.

Hinter der ersten Linsengruppe folgen entlang der optischen Achse drei weitere Linsengruppen, die relativ zu der ersten Linsengruppe jeweils entlang der optischen Achse individuell verschiebbar sind. Vorzugsweise besitzt jede der vier Linsengruppen zumindest ein transparentes optisches Element mit zwei lichtbrechenden Flächen, von denen mindestens eine Fläche konvex oder konkav gewölbt ist. Außerdem ist es bevorzugt, wenn die Linsengruppen jeweils rotationssymmetrisch zur optischen Achse sind. Außerdem ist zwischen der zweiten Linsengruppe und der dritten Linsengruppe eine Blende angeordnet, die ebenfalls entlang der optischen Achse individuell verschiebbar ist. Individuell verschiebbar bedeutet in diesem Zusammenhang, dass das entsprechende Element entlang der optischen Achse eine Bewegung ausführen kann, die sich von ggf. zeitgleichen Bewegungen der anderen Elemente in Bezug auf Bewegungsrichtung und/oder Bewegungshub unterscheidet. Mit anderen Worten können sich die zweite Linsengruppe, die Blende, die dritte Linsengruppe und die vierte Linsengruppe jeweils so entlang der optischen Achse bewegen, dass die relativen Abstände zwischen den vier Linsengruppen und der Blende individuell variiert werden können. Beispielsweise kann der Abstand zwischen der zweiten Linsengruppe und der Blende größer oder kleiner werden. Ferner kann der Abstand zwischen der Blende und der dritten Linsengruppe größer oder kleiner werden, und der Abstand zwischen der dritten Linsengruppe und der vierten Linsengruppe kann größer oder kleiner werden. Die individuell verstellbaren Linsengruppen und die dazwischen angeordnete, ebenfalls individuell verschiebbare Blende ermöglichen eine hohe Flexibilität mit vielen Kombinationsmöglichkeiten.

In einigen Ausführungsbeispielen kann das Objektiv eine fünfte Linsengruppe besitzen, die im Bereich der Lichtaustrittsöffnung angeordnet und vorzugsweise feststehend ist. Prinzipiell sind weitere Linsengruppen möglich, aber es ist bevorzugt, wenn das neue Objektiv nicht mehr als die fünf genannten Linsengruppen aufweist. Die vier oder fünf Linsengruppen erzeugen gemeinsam ein Bild auf einem Bildsensor, der über die Schnittstelle mit dem Objektiv gekoppelt ist. Aufgrund der individuellen Verschiebbarkeit der drei Linsengruppen und der Blende kann das neue Objektiv sehr flexibel auf unterschiedliche Abbildungsverhältnisse eingestellt werden. Wie nachfolgend anhand eines bevorzugten Ausführungsbeispiels erläutert ist, ermöglicht das neue Objektiv insbesondere eine variable Einstellung der Vergrößerung und eine variable Einstellung des Arbeitsabstandes. In den bevorzugten Ausführungsbeispielen ist das neue Objektiv über den gesamten Einstellbereich der Vergrößerung und über den gesamten Einstellbereich des Arbeitsabstandes telezentrisch, was mit Hilfe der individuell verschiebbaren Blende sehr gut erreicht werden kann. Die individuelle Verstellbarkeit der drei Linsengruppen macht es insbesondere möglich, eine weitgehend gleichbleibende Vergrößerung über den gesamten Variationsbereich des Arbeitsabstandes oder eine weitgehend gleichbleibende Fokussierung auf einen Arbeitsabstand über den gesamten Vergrößerungsbereich zu realisieren. Diese Eigenschaften machen es möglich, ein Messobjekt, das starke Höhendifferenzen in Richtung der optischen Achse des Objektivs besitzt, mit gleichbleibenden Parametern zu vermessen, ohne dass der optische Sensor als solcher näher an das Messobjekt heran oder weiter von dem Messobjekt weg bewegt werden muss. Letzteres ermöglicht sehr schnelle Messungen an einer Vielzahl von Messpunkten. Die feststehende erste Linsengruppe besitzt darüber hinaus den Vorteil, dass die "Störkontur" des optischen Sensors im Messvolumen des Koordinatenmessgerätes stets gleich ist. Die Gefahr, dass der Sensor während eine umfangreichen Messung mit dem Messobjekt kollidiert, ist reduziert.

Das neue Koordinatenmessgerät und das entsprechende Objektiv ermöglichen aufgrund der variablen Einstellbarkeit den Verzicht auf Wechseloptiken, die zum Teil bei bisherigen Koordinatenmessgeräten zum Einsatz kamen, um verschiedene Messaufgaben auszuführen. Zumindest kann die Anzahl von Wechseloptiken deutlich reduziert werden

Aufgrund der hohen Flexibilität ist das Objektiv des neuen Koordinatenmessgerätes ferner in der Lage, mit verschiedenen optischen Sensoren zusammenzuwirken. In einem bevorzugten Ausführungsbeispiel kann das Objektiv wahlweise mit einem Autofokussensor, einem konfokalen Weißlichtsensor, einem Triangulationssensor u.a. kombiniert werden, wobei die Bildaufnahme sowie die Ein- und Auskopplung von bestimmten Beleuchtungen, die für die Sensorprinzipien benötigt werden, jeweils in bzw. durch das neue Objektiv erfolgen können. In einigen Ausführungsbeispielen besitzt das neue Objektiv eine weitere Lichtein- und/oder Lichtaustrittöffnung, über die Licht wahlweise ein- und/oder ausgekoppelt werden kann, wobei das Licht in diesem Fall nicht alle Linsengruppen durchläuft. Mit anderen Worten bietet das neue Koordinatenmessgerät die Möglichkeit, verschiedene Sensorprinzipien mit einem einheitlichen Objektiv zu koppeln, das aufgrund der vier angegebenen Linsengruppen und der axial verschiebbaren Blende eine hohe Flexibilität bietet, um mit den verschiedenen Sensorprinzipien zusammenzuwirken.

Das neue Koordinatenmessgerät lässt sich daher vergleichsweise kostengünstig realisieren. Darüber hinaus spart das neue Koordinatenmessgerät Bauraum, der bisher für die Bereitstellung von Wechseloptiken und/oder die Unterbringung mehrerer Objektive im Messkopf benötigt wird.

Die oben genannte Aufgabe ist daher vollständig gelöst.

In einer bevorzugten Ausgestaltung der Erfindung sind in einem Speicher individuelle vordefinierte Steuerkurven für die zweite, dritte und vierte Linsengruppe und die Blende hinterlegt, wobei die zweite, dritte und vierte Linsengruppe und die Blende jeweils in Abhängigkeit von den individuellen Steuerkurven entlang der optischen Achse verstellbar sind. Die individuellen Steuerkurven können in einer festen Beziehung zueinander stehen, so dass die individuellen Bewegungen der verschiebbaren Linsengruppen und der Blende aufeinander abgestimmt sind. Gleichwohl bewegen sich die zweite, dritte und vierte Linsengruppe und die Blende auch in diesem Fall individuell in dem Sinne, dass sich die jeweilige Bewegungsrichtung und der jeweilige Bewegungshub aller verschiebbaren Elemente voneinander unterscheiden. Dementsprechend ist das neue Objektiv so ausgebildet, dass die zweite, dritte und vierte Linsengruppe und die Blende jeweils in Abhängigkeit von einer individuellen Steuerkurve entlang der optischen Achse verstellbar sind, wobei die individuellen Steuerkurven für die zweite, dritte und vierte Linsengruppe und für die Blende jeweils verschieden voneinander sind. Das neue Verfahren benutzt die individuellen Steuerkurven in der bevorzugten Ausgestaltung, um die jeweilige Position der zweiten, dritten und vierten Linsengruppe und der Blende entlang der optischen Achse flexibel einzustellen.

In einigen Ausführungsbeispielen besitzt das Objektiv einen inneren Aufbau, bei dem die zweite, dritte und vierte Linsengruppe und/oder die Blende mechanisch miteinander gekoppelt sind, so dass sich die festen Beziehungen der individuellen Steuerkurven beim Einstellen der Position eines der Elemente entlang der optischen Achse aufgrund der mechanischen Kopplung ergeben, beispielsweise über Kurvenscheiben und/oder Getriebe. Die mechanische Kopplung bildet gewissermaßen einen mechanischen Speicher. In anderen Ausführungsbeispielen besitzt das Objektiv eine elektrische und/oder optische Schnittstelle zur Übertragung von Steuersignalen, die die individuellen Steuerkurven repräsentieren, sowie einen elektrischen Antrieb für jedes zu bewegende Element. In einigen Varianten beinhaltet das neue Objektiv einen elektronischen Speicher, der im Objektivkörper integriert oder separat vom Objektivkörper ausgebildet sein kann, wobei die individuellen Steuerkurven in dem Speicher abgespeichert sind. Ferner ist es in weiteren Ausführungsbeispielen möglich, dass einzelne Elemente der zweiten, dritten und vierten Linsengruppe und/oder Blende mechanisch miteinander gekoppelt sind, während andere Elemente der zweiten, dritten und vierten Linsengruppe und Blende ohne mechanische Kopplung ausgebildet sind, wobei die gemeinsame Steuerung der mechanisch ungekoppelten Elemente über eine optische und/oder elektrische Schnittstelle des Objektivs und individuelle Antriebe bewirkt wird.

Die individuellen Steuerkurven repräsentieren die Abhängigkeit der jeweiligen individuellen Position der Elemente von externen Stellgrößen, wie insbesondere einer vom Bediener vorgegebenen Vergrößerung und einem vorgegebenen Arbeitsabstand bzw. einer entsprechenden Fokussierung. Weitere Stellgrößen können eine bestimmte Auflösung oder eine Kombination von diesen Stellgrößen sein, die sich aus einer definierten Messaufgabe ergibt. Die individuellen Steuerkurven bilden eine Kurvenschar, die in einigen Ausführungsbeispielen eine zweidimensionale Abhängigkeit der individuellen Positionen der Elemente entlang der optischen Achse von der gewünschten Vergrößerung und der gewünschten Fokussierung repräsentieren. In diesen Ausführungsbeispielen bilden die Steuerkurven also eine 2D-Kurvenschar, die eine individuelle, jedoch aufeinander abgestimmte Position aller verstellbaren Elemente repräsentiert. Für jeden wählbaren Arbeitsabstand gibt es eine 1D-Kurvenschar, die die Vergrößerung und die entsprechenden individuellen Positionen der Elemente definiert. Umgekehrt gibt es für jede Vergrößerung eine andere 1D-Kurvenschar, die die individuellen Positionen für unterschiedliche Fokussierungen bestimmt.

Die Ausgestaltung entlastet den Anwender des neuen Koordinatenmessgerätes und des neuen Verfahrens, indem vordefinierte individuelle Positionen für verschiedene optische Stellgrößen satzweise bereitgestellt sind. Der Anwender kann sich auf die optischen Stellgrößen, die er für eine bestimmte Messaufgabe benötigt, konzentrieren und muss sich nicht um Details des neuen Objektivs kümmern, die zum Erreichen einer optimalen Abbildungsqualität von Bedeutung sind. Dementsprechend vereinfacht diese Ausgestaltung die Verwendung des neuen Objektivs im Rahmen des neuen Koordinatenmessgerätes und des neuen Verfahrens, und sie ermöglicht eine schnellere Implementierung einer neuen Messaufgabe.

In bevorzugten Ausführungsbeispielen beinhalten die individuellen Steuerkurven mehrere Sätze von Steuerkurven, wobei ein erster Satz so gewählt ist, dass ein durch das Objektiv aufgenommenes Bild während einer Verstellung der Abbildungsgröße und/oder Auflösung weitgehend konstant scharf gehalten wird (konstante Fokussierung bei variabler Vergrößerung). Ein zweiter Satz ist vorzugsweise so gewählt, dass die beweglichen Elemente ihre jeweilige Stellposition mit maximaler Geschwindigkeit anfahren, wobei Unschärfen während der Verstellung in Kauf genommen sind. Ein weiterer Satz ist vorzugsweise so gewählt, dass die Elemente jeweils synchron zueinander verstellt werden, wobei die Abbildungsgröße über verschiedene Arbeitsabstände/Fokussierungen konstant gehalten wird.

In einer weiteren Ausgestaltung sind die individuellen Steuerkurven dementsprechend dazu ausgebildet, wahlweise eine variable Vergrößerung bei weitgehend gleichbleibender Fokussierung auf einen definierten Arbeitsabstand oder eine variable Fokussierung auf verschiedene Arbeitsabstände bei weitgehend gleichbleibender Vergrößerung zu erzeugen.

Wie bereits oben angedeutet, definieren die Steuerkurven eine individuelle Abhängigkeit der Position der verstellbaren Elemente entlang der optischen Achse von einer gewünschten Fokussierung und einer gewünschten Vergrößerung. Für jede Linsengruppe und die Blende sind die Kurven unterschiedlich. In bevorzugten Ausführungsbeispielen stehen die zweite und dritte Linsengruppe bei einer hohen Vergrößerung nahe beieinander, während die Abstände zur ersten und vierten Linsengruppe relativ groß sind. Vorzugsweise fungiert die vierte Linsengruppe bei der maximalen Vergrößerung als reines Projektiv, welches das von der ersten, zweiten und dritten Linsengruppe entworfene Bild in die Ebene des Bildsensors der angeschlossenen Kamera verlagert. Bei der geringsten Vergrößerung steht die zweite Linsengruppe demgegenüber am dichtesten bei der ersten Linsengruppe (minimaler Abstand zwischen erster und zweiter Linsengruppe), und die dritte und die vierte Linsengruppe sind einander angenähert. Die Ausgestaltung ermöglicht eine sehr einfache Bedienung des neuen Objektivs und des darauf basierenden Koordinatenmessgerätes, und sie trägt daher dazu bei, dass ein Anwender eine neue Messaufgabe relativ schnell ausführen kann.

In einer weiteren Ausgestaltung definieren die erste und zweite Linsengruppe zusammen einen Brennpunkt (und damit auch eine Brennebene senkrecht zur optischen Achse), der zwischen der zweiten und dritten Linsengruppe liegt, wobei die Blende und die zweite Linsengruppe so aufeinander abgestimmt sind, dass die Blende stets in dem Brennpunkt bzw. der Brennebene angeordnet ist. Vorzugsweise sind die Steuerkurven für die Blende und die zweite Linsengruppe dementsprechend aufeinander abgestimmt. Besonders bevorzugt ist es, wenn die Steuerkurven so gewählt sind, dass sich die zweite Linsengruppe und die Blende stets gegenläufig entlang der optischen Achse bewegen, da man so auf recht einfache Weise erreichen kann, dass die Blende stets in dem Brennpunkt des aus der ersten und zweiten Linsengruppe gebildeten Teilsystems gehalten wird.

Diese Ausgestaltung ermöglicht trotz der flexiblen Variationsmöglichkeiten eine objektseitige Telezentrie über sämtliche Vergrößerungen und Arbeitsabstände. Die objektseitige Telezentrie ist äußerst vorteilhaft, um insbesondere die Tiefe von Bohrungen, Vorsprüngen oder Ausnehmungen an einem Messobjekt zu bestimmen, weil der "Blick" auf das Messobjekt trotz der in diesen Fällen unterschiedlichen Arbeitsabstände weitgehend gleichbleibt. Vorteilhaft wird durch eine objektseitige Telezentrie eine perspektivische Verzerrung des Messobjekts vermieden. Die gegenläufige Bewegung der zweiten Linsengruppe und der Blende ermöglicht eine kostengünstige Realisierung dieser Eigenschaft.

In einer weiteren Ausgestaltung besitzt die Blende eine variable Blendenöffnung, die vorzugsweise in Abhängigkeit von der Position der Blende entlang der optischen Achse variiert.

In dieser Ausgestaltung besitzt das neue Objektiv einen weiteren Freiheitsgrad, nämlich die Öffnung der Blende. Diese macht es möglich, die numerische Apertur des Objektivs zu verändern und so die erreichbare Auflösung des Objektivs zu variieren. In bevorzugten Ausführungsbeispielen sind die oben erwähnten Steuerkurven einschließlich der individuellen Steuerkurve für die Blendenöffnung so ausgebildet, dass das Objektiv einen Betriebsmodus mit einer konstanten bildseitigen Apertur über verschiedene Arbeitsabstände bietet. Dieser Betriebsmodus ist vorteilhaft, um über verschiedene Arbeitsabstände mit einer gleichbleibend hohen Messgenauigkeit arbeiten zu können. Des Weiteren ist es bevorzugt, wenn die Steuerkurven so ausgebildet sind, dass das Objektiv einen Betriebsmodus mit jeweils maximaler Apertur bei verschiedenen Arbeitsabständen und/oder Vergrößerungen ermöglicht.

In den bevorzugten Ausführungsbeispielen liegt die Blende zentrisch zur optischen Achse, und zwar mit einem Zentrierfehler, der geringer als 20 µm ist und vorzugsweise weniger als 10 µm ist. Vorzugsweise ist die Blende eine Irisblende, die individuell motorisch ansteuerbar ist, wobei die Ansteuerung unter Verwendung einer Steuerkurve erfolgt, die zu der oben erwähnten Kurvenschar gehört. Diese Ausführungsbeispiele ermöglichen eine einfache Implementierung und eine gleichbleibend hohe Messgenauigkeit über den gesamten Arbeitsbereich.

In einer weiteren Ausgestaltung weist das Objektiv eine Vielzahl von Schlitten und motorischen Antrieben auf, wobei die zweite, dritte und vierte Linsengruppe und die Blende jeweils mit einem eigenen Schlitten gekoppelt sind, der entlang der optischen Achse verstellbar ist, und wobei die Schlitten mit Hilfe der motorischen Antriebe individuell verfahrbar sind.

In dieser Ausgestaltung sind die entlang der optischen Achse verstellbaren Elemente jeweils mit einem eigenen Antrieb gekoppelt. In einigen Ausführungsbeispielen ist der Antrieb ein Schrittmotor, der vorzugsweise im Vollschrittbetrieb arbeitet, da dies einen geringen Wärmeeintrag in das Objektiv zur Folge hat. Die Ausgestaltung ermöglicht eine modulare und vergleichsweise kostengünstige Realisierung.

In einer weiteren Ausgestaltung besitzt die erste Linsengruppe eine positive Brechkraft. Vorzugsweise besitzt die zweite Linsengruppe eine negative Brechkraft, die dritte Linsengruppe eine positive Brechkraft und die vierte Linsengruppe eine negative Brechkraft.

Diese Ausgestaltung, insbesondere die positiv-negativ-positiv wechselnde Brechkraft der ersten drei Linsengruppen in Kombination mit der negative Brechkraft an der vierten Linsengruppe, hat sich in praktischen Versuchen als sehr vorteilhaft erwiesen, um eine kompakte Bauform und eine geringe Störkontur des Objektivs im Messvolumen des neuen Koordinatenmessgerätes zu erreichen.

In einer weiteren Ausgestaltung ist im Objektivkörper zwischen der ersten und zweiten Linsengruppe ein Freiraum, in dem ein Strahlteiler angeordnet ist. In einer besonders bevorzugten Variante befindet sich auf Höhe des Strahlteilers eine weitere Schnittstelle am Objektivkörper, über die eine definierte Beleuchtung in das Objektiv eingekoppelt und/oder ein nur durch die erste Linsengruppe erzeugtes Bild ausgekoppelt werden kann.

In dieser Ausgestaltung besteht zwischen der ersten Linsengruppe und der verschiebbaren zweiten Linsengruppe ein definierter Mindestabstand, den die zweite Linsengruppe nicht unterschreiten kann. Der Freiraum macht es möglich, einen Strahlteiler im optischen Strahlengang unterzubringen, der die Ein- oder Auskopplung von Licht "sehr weit vorne" ermöglicht. Die Ausgestaltung erhöht die Flexibilität des neuen Objektivs, da sie insbesondere die Einkopplung von definierten Beleuchtungen für verschiedene Sensorprinzipien erleichtert. Beispielsweise ist in einigen Ausführungsbeispielen des Koordinatenmessgerätes ein konfokaler Weißlichtsensor (chromatischer Weißlichtsensor) an die weitere Schnittstelle angeschlossen. In einigen Ausführungsbeispielen erzeugt die erste Linsengruppe einen definierten chromatischen Längsfehler, d.h. die Fokusebene der ersten Linsengruppe variiert in definierter Weise in Abhängigkeit von der Wellenlänge des durchtretenden Lichts. Der definierte chromatische Längsfehler liegt in einer Größenordnung, die mit fachüblichen Korrekturen reduziert werden könnte. Mit anderen Worten ist der Längsfehler "bewusst" hervorgerufen und nicht allein das Resultat von Fertigungstoleranzen. Ein konfokaler Weißlichtsensor kann dann aus Reflexionen, die von der Werkstückoberfläche durch die erste Linsengruppe zum Sensor gelangen, und anhand einer spektralen Auswertung der Reflexionen die Höhenlage der reflektierenden Werkstückoberfläche relativ zu dem Objektiv bestimmen. Der im Objektivkörper verbleibende Freiraum zwischen der ersten und zweiten Linsengruppe macht es möglich, einen chromatischen Längsfehler der ersten Linsengruppe für einen solchen konfokalen Weißlichtsensor zu nutzen, während mit Hilfe der weiteren Linsengruppen eine Korrektur auf dem weiteren Strahlengang zur Lichtaustrittsöffnung für die Kamera erreicht wird. Daher hat sich die Bereitstellung des Freiraums zwischen der ersten und zweiten Linsengruppe als eine sehr vorteilhafte Realisierung erwiesen.

In weiteren Ausführungsbeispielen kann über die weitere Schnittstelle ein Streifenmuster oder eine andere strukturierte Beleuchtung eingekoppelt werden, die beispielsweise anhand des von der Kamera aufgenommenen Bildes analysiert wird, um ein Messobjekt zu vermessen. Vorzugsweise ist zwischen der vierten Linsengruppe und der Lichtaustrittsöffnung des Objektivs ein weiterer Freiraum vorgesehen, in dem ebenfalls ein Strahlteiler angeordnet ist. Bevorzugt ist eine dritte Schnittstelle auf Höhe des weiteren Strahlteilers angeordnet, so dass auch hinter dem optischen System aus den vier Linsengruppen die Ein- und Auskopplung von Beleuchtung und/oder Signalen möglich ist. Die Flexibilität und der Einsatzbereich des neuen Objektivs und des entsprechenden Koordinatenmessgerätes werden damit noch weiter erhöht.

In einer weiteren Ausgestaltung besitzt das Objektiv ein separates Deckglas, das vor der ersten Linsengruppe im Bereich der Lichteintrittsöffnung angeordnet ist.

In dieser Ausgestaltung trifft Licht, das über die Lichteintrittsöffnung in den Strahlengang des Objektivs eintritt, zunächst auf ein Deckglas und es durchläuft erst anschließend die Reihe der Linsengruppen bis zur Lichtaustrittsöffnung. Typischerweise besitzt das Deckglas keine gekrümmte, optisch wirksame (brechenden) Fläche, sondern zwei ebene Flächen. Diese können parallel zueinander liegen oder schräg zueinander.

Die Anordnung eines separaten Deckglases vor der ersten Linsengruppe ist eine für Messobjektive ungewöhnliche Maßnahme, da das Deckglas in jedem Fall die optischen Eigenschaften des Objektivs bzw. dessen Strahlengang beeinflusst. In den bevorzugten Ausführungsbeispielen sind die optischen Eigenschaften des Deckglases daher bei der Korrektur der Linsengruppen berücksichtigt, d.h. das Deckglas ist in der Gesamtkorrektur des Objektivs enthalten. Die Bereitstellung eines separaten Deckglases vor der ersten Linsengruppe ist insbesondere dann ungewöhnlich, wenn die erste Linsengruppe zur Erzeugung eines definierten chromatischen Längsfehlers ausgebildet ist, was in bevorzugten Ausführungsbeispielen des neuen Objektivs der Fall ist. Die Ausgestaltung besitzt jedoch den Vorteil, dass ein separates Deckglas einfacher gereinigt und gegebenenfalls ausgewechselt werden kann, wenn die Lichteintrittsöffnung des Objektivs im alltäglichen Betrieb verschmutzt oder gar beschädigt wird. Dementsprechend ist das neue Objektiv in bevorzugten Ausführungsbeispielen so ausgebildet, dass das separate Deckglas reversibel und zerstörungsfrei lösbar im Objektivkörper gehalten ist.

In einer weiteren Ausgestaltung bestehen die erste, zweite, dritte und vierte Linsengruppe jeweils aus zumindest zwei Linsen. In den bevorzugten Ausführungsbeispielen beinhaltet jede Linsengruppe mindestens ein Kittglied, d.h. mindestens zwei Einzellinsen in jeder der vier Linsengruppen sind permanent und großflächig entlang ihrer optisch wirksamen Flächen verbunden.

Diese Ausgestaltung reduziert die Anzahl der Grenzflächen und trägt daher zu einer hohen Abbildungsgüte über einen großen spektralen Arbeitsbereich bei. In einem bevorzugten Ausführungsbeispiel bilden die vier Linsengruppen lediglich vierzehn Grenzflächen.

In einer weiteren Ausgestaltung besitzt zumindest eine Linsengruppe eine erste und zumindest eine zweite Einzellinse, die innerhalb der Linsengruppe relativ zueinander verschoben werden können. Vorzugsweise ist der maximale Bewegungshub der Einzellinsen relativ zueinander klein im Vergleich zu den entsprechenden maximalen Bewegungshüben der Linsengruppen selbst. In einem Ausführungsbeispiel besitzt das Objektiv einen Piezoaktor, der die erste und zweite Einzellinse relativ zueinander verschiebt. Ferner ist es bevorzugt, wenn die erste und zweite Einzellinse in einer ersten Arbeitsposition flächig aneinander anliegen und somit eine zusammengesetzte Linse bilden, während sie in einer zweiten Arbeitsposition in einem definierten Abstand zueinander angeordnet sind.

In dieser Ausgestaltung können die zumindest zwei Einzellinsen einer der Linsengruppen wahlweise auseinander gezogen und wieder zusammen geschoben werden. Damit lässt sich auf eine sehr kostengünstige Weise ein definierter chromatischer Längsfehler des neuen Objektivs erzeugen. Dieser Längsfehler kann in vorteilhafter Weise für einen konfokalen Weißlichtsensor ausgewertet werden. Die Ausgestaltung besitzt den Vorteil, dass das Objektiv einen integrierten, wahlweise aktivierbaren Längsfehler zur Verfügung stellt, ohne dass ein Bediener des neuen Koordinatenmessgerätes ein Linsenelement und/oder ein Deckglas auswechseln muss.

In einer weiteren Ausgestaltung beinhalten die oben genannten Steuerkurven einen Satz, der zur Erzeugung eines definierten chromatischen Längsfehlers ausgebildet ist. Dementsprechend können die beweglichen Linsenelemente und/oder die beweglichen Linsengruppen als solche relativ zu einander in ausgewählte Positionen bewegt werden, die so gewählt sind, dass sich ein definierter chromatischer Längsfehler ergibt.

In einer weiteren Ausgestaltung bilden die mindestens vier separaten Linsengruppen genau vier separate Linsengruppen.

Diese Ausgestaltung zeichnet sich durch einen relativ einfachen und kostengünstigen Aufbau aus. Überraschenderweise hat sich gezeigt, dass mit vier separaten Linsengruppen, von denen drei in der oben beschriebenen Weise individuell verschiebbar sind, ein Messobjektiv realisiert werden kann, das die oben beschriebenen Anforderungen in hervorragendem Maß erfüllt.

In einer weiteren Ausgestaltung bilden die mindestens vier separaten Linsengruppen fünf separate Linsengruppen. Vorzugsweise ist eine fünfte Linsengruppe ortsfest im Bereich der Lichtaustrittsöffnung, d.h. zwischen der vierten Linsengruppe und der Schnittstelle zum Anschluss der Kamera, angeordnet.

Diese Ausgestaltung besitzt den Vorteil, dass mit Hilfe der fünften Linsengruppe eine bildseitige Telezentrie über den gesamten Arbeitsbereich des neuen Objektivs relativ einfach erreicht werden kann. Dies trägt dazu bei, eine über den gesamten Arbeitsbereich des Objektivs gleichbleibende Beleuchtung des Bildsensors in der Kamera zu gewährleisten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Koordinatenmessgerätes in einer Ansicht von schräg vorne,
- Fig. 2: eine schematische Darstellung des Objektivs aus dem Koordinatenmessgerät aus Fig. 1,
- Fig. 3: ein Schnittbild der Linsengruppen des Objektivs aus Fig. 2 gemäß einem bevorzugten Ausführungsbeispiel, wobei die Linsengruppen in fünf verschiedenen Arbeitspositionen dargestellt sind, die unterschiedliche Vergrößerungen bei jeweils gleichem Arbeitsabstand repräsentieren,
- Fig. 4: ein weiteres Schnittbild des Objektivs aus Fig. 2 mit fünf verschiedenen Arbeitspositionen, die fünf verschiedene Vergrößerungen bei einem anderen Arbeitsabstand als in Fig. 3 repräsentieren,
- Fig. 5: ein weiteres Schnittbild des Objektivs aus Fig. 2, wobei die Position der Linsengruppen entlang der optischen Achse bei jeweils gleicher Vergrößerung für fünf verschiedene Arbeitsabstände dargestellt ist, und
- Fig. 6: eine Tabelle mit numerischen Werten, die die Positionen der Linsengruppen und der Blende und damit die individuellen Steuerkurven in einem bevorzugten Ausführungsbeispiel repräsentieren.

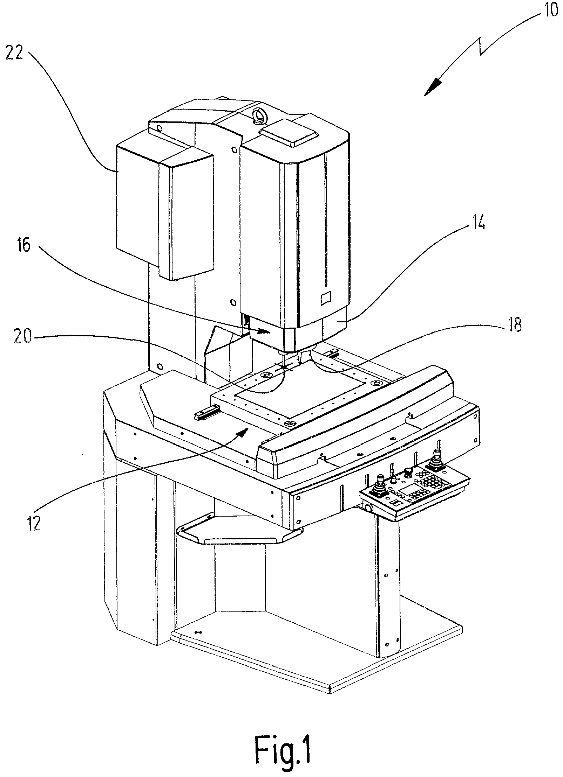

In Fig. 1 ist ein Ausführungsbeispiel des neuen Koordinatenmessgerätes in seiner Gesamtheit mit der Bezugsziffer 10 bezeichnet. Das Koordinatenmessgerät 10 besitzt in diesem Ausführungsbeispiel eine Werkstückaufnahme in Form eines Kreuztisches 12. Oberhalb von dem Kreuztisch 12 ist eine Pinole 14 angeordnet. Die Pinole 14 trägt einen Messkopf 16, der hier einen optischen Sensor 18 und einen separaten taktilen Sensor 20 hält. Mit dem taktilen Sensor 20 kann das Koordinatenmessgerät 10 in bekannter Weise einen Messpunkt an einem Messobjekt antasten, das zu diesem Zweck auf dem Kreuztisch 12 angeordnet wird. Der taktile Sensor 20 wird mit Hilfe des Kreuztisches 12 und der Pinole 14 relativ zu dem Messobjekt verfahren, um den Messpunkt anzutasten. Anhand der jeweiligen Positionen des Kreuztisches und der Pinole können dann Raumkoordinaten des angetasteten Messpunktes in bekannter Weise bestimmt werden.

Das Koordinatenmessgerät 10 ist ein bevorzugtes Beispiel eines Multisensorik-Koordinatenmessgerätes, bei dem zusätzlich zu dem optischen Sensor 18 ein taktiler Sensor 20 zur Vermessung eines Messobjekts genutzt werden kann. Alternativ kann das neue Koordinatenmessgerät in anderen Ausführungsbeispielen lediglich einen oder mehrere optische Sensoren besitzen.

Des Weiteren kann die vorliegende Erfindung nicht nur bei Koordinatenmessgeräten verwendet werden, die den in Fig. 1 dargestellten Maschinenaufbau besitzen. Prinzipiell kann das neue Koordinatenmessgerät in Brückenbauweise, Portalbauweise, Horizontalarmbauweise oder einer beliebigen anderen Maschinenbauweise ausgebildet sein.

Mit der Bezugsziffer 22 ist eine Auswerte- und Steuereinheit bezeichnet, die einerseits die Antriebe (hier nicht bezeichnet) des Koordinatenmessgerätes 10 steuert, um den Messkopf 16 relativ zu einem Messobjekt zu verfahren. Andererseits liest die Auswerte- und Steuereinheit 22 Sensordaten des optischen und/oder taktilen Sensors 18, 20 ein, und sie bestimmt in Abhängigkeit von diesen Sensordaten und in Abhängigkeit von der jeweiligen Position des Messkopfes und Kreuztisches Raumkoordinaten für einen oder mehrere Messpunkte an dem Messobjekt. Die grundsätzliche Arbeitsweise eines solchen Koordinatenmessgerätes ist den einschlägigen Fachleuten bekannt und daher im Detail nicht weiter erläutert.

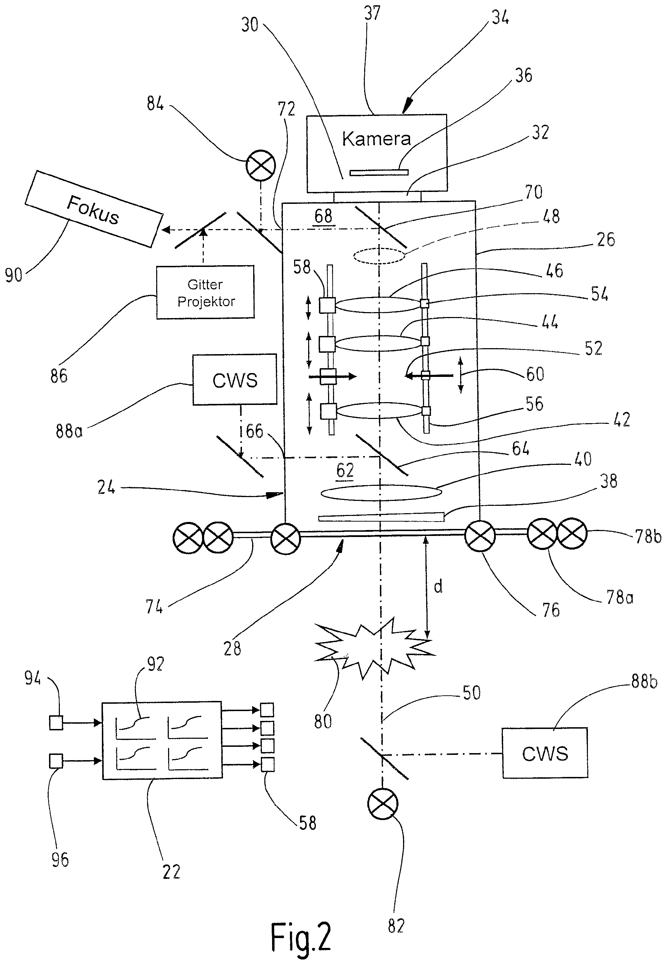

Fig. 2 zeigt ein bevorzugtes Ausführungsbeispiel des optischen Sensors 18, wobei der optische Sensor 18 in diesem Ausführungsbeispiel genau genommen mehrere optische Sensoren beinhaltet, die wahlweise vorhanden und verwendet sein können. Das neue Objektiv kann darüber hinaus mit weiteren optischen Sensoren kombiniert werden, etwa mit einem deflektometrisch messenden Sensor.

Der Sensor 18 beinhaltet ein Objektiv 24 mit einem Objektivkörper 26. In typischen Ausführungsbeispielen ist der Objektivkörper 26 ein Tubus mit einer Lichteintrittsöffnung 28 und einer Lichtaustrittsöffnung 30, die an gegenüberliegenden Enden des Tubus angeordnet sind. Prinzipiell kann der Objektivkörper 26 jedoch auch eine von einem Tubus abweichende Form haben.

An der Lichtaustrittsöffnung 30 ist eine Schnittstelle 32 ausgebildet, die zum Anschluss einer Kamera 34 mit einem Bildsensor 36 dient. In bevorzugten Ausführungsbeispielen ist die Schnittstelle 32 eine standardisierte bzw. kommerziell verbreitete Schnittstelle zur Kopplung von Kameras und Objektiven, etwa ein sogenannter F-Mount oder ein sogenannter C-Mount. In anderen Ausführungsbeispielen ist die Schnittstelle 32 eine proprietäre Schnittstelle, die es insbesondere möglich macht, das Gehäuse 37 der Kamera 34 direkt mit dem Objektivkörper 26 zu einer Baueinheit dauerhaft zu verbinden, etwa zu verschrauben und/oder zu verkleben. Prinzipiell können auch andere standardisierte oder proprietäre Schnittstellen zum Anschluss der Kamera 34 an den Objektivkörper 26 verwendet sein.

Im Bereich der Lichteintrittsöffnung 28, die das distale Ende des Objektivs 24 definiert, ist ein Deckglas 38 im Objektivkörper 26 oder am Objektivkörper 26 angeordnet. In einigen Ausführungsbeispielen kann das Deckglas 38 ein Schraubglas sein, das in eine Gewindefassung am distalen Ende des Objektivkörpers 26 eingeschraubt wird. In anderen Ausführungsbeispielen kann das Deckglas 38 in eine geeignete Ausnehmung am Objektivkörper 26 eingeschoben, eingeklipst, eingeklebt oder anderweitig mit dem Objektivkörper 26 ortsfest verbunden sein. In den bevorzugten Ausführungsbeispielen ist das Deckglas 38 so mit dem Objektivkörper 26 verbunden, dass ein Anwender des Koordinatenmessgerätes 10 das Deckglas 38 ohne eine Beschädigung des Objektivs 24 austauschen kann.

In dem dargestellten Ausführungsbeispiel ist das Deckglas 38 eine keilförmige Glasplatte, deren Dicke von einem Rand zum anderen Rand zunimmt, wie dies in der vereinfachten Schnittdarstellung der Fig. 2 dargestellt ist. Das Deckglas 38 besitzt in diesem Fall einen Keilwinkel, der so gewählt ist, dass ein Reflex an der vorderen (zum distalen Ende des Objektivs 24 hin) oder der hinteren Seite des Deckglases 38 nicht auf den Bildsensor 36 der Kamera 34 gelangt. Im dargestellten Ausführungsbeispiel ist das Deckglas 38 so angeordnet, dass seine vordere Seite planparallel zu der Lichteintrittsöffnung 28 liegt, während die hintere Seite leicht schräg dazu angeordnet ist. In bevorzugten Ausführungsbeispielen ist das Deckglas 38 jedoch so angeordnet, dass seine vordere Seite leicht schrägt zu der Lichteintrittsöffnung 28 liegt (hier nicht dargestellt).

In anderen Ausführungsbeispielen könnte ein Deckglas mit planparallelen Vorder- und Rückseiten leicht schräg zum Bildsensor 36 bzw. der nachfolgend noch näher erläuterten optischen Achse des Objektivs 24 angeordnet sein. In einigen Ausführungsbeispielen kann das Deckglas 38 eine Positionsmarke, etwa in Form einer Kerbe, einer Nut, einer Passung o.ä. aufweisen, damit es nur in einer definierten Drehposition und Lage an dem Objektivkörper 26 befestigt werden kann.

In weiteren Ausführungsbeispielen kann das Deckglas 38 in Form einer dünnen Folie realisiert sein, die im Bereich der Lichteintrittsöffnung 28 des Objektivs 24 eingespannt ist. In einigen Ausführungsbeispielen kann das Deckglas polarisierend sein, so dass das durchtretende Licht polarisiert wird, und/oder das Deckglas kann ein Farbfilter zur Unterdrückung von Umgebungslicht beinhalten.

Im dargestellten Ausführungsbeispiel ist zwischen dem Deckglas 38 und der Lichtaustrittsöffnung 30 des Objektivs 24 ein Linsensystem mit einer ersten Linsengruppe 40, einer zweiten Linsengruppe 42, einer dritten Linsengruppe 44 und einer vierten Linsengruppe 46 angeordnet. In einigen Ausführungsbeispielen ist zwischen der vierten Linsengruppe 46 und der Lichtaustrittsöffnung 30 noch eine fünfte Linsengruppe angeordnet, die hier in gestrichelten Linien dargestellt ist. Die Linsengruppen 40-48 definieren eine optische Achse 50, und sie sind in dem dargestellten Ausführungsbeispiel jeweils zentrisch zu der optischen Achse 50 angeordnet.

Zwischen der zweiten Linsengruppe 42 und der dritten Linsengruppe 44 ist eine Blende 52 angeordnet. In den bevorzugten Ausführungsbeispielen ist die Blende 52 eine Irisblende, d.h. eine Blende, deren lichter Innendurchmesser variiert werden kann.

Die zweite, dritte und vierte Linsengruppe 42, 44, 46 sowie die Blende 52 sind jeweils mit einem eigenen Schlitten 54 gekoppelt, der entlang von zwei Führungsschienen 56 bewegt werden kann. Ferner sind die drei Linsengruppen und die optische Blende 52 in diesem Ausführungsbeispiel jeweils mit einem elektrischen Antrieb 58 gekoppelt. Mit Hilfe der Antriebe 58 können die zweite, dritte und vierte Linsengruppe sowie die Blende 52 jeweils individuell parallel zur optischen Achse 50 verfahren werden, wie das anhand der Pfeile 60 angedeutet ist. Im Gegensatz dazu ist die erste Linsengruppe 40 und die optionale fünfte Linsengruppe 48 in den bevorzugten Ausführungsbeispielen ortsfest in dem Objektivkörper 26 angeordnet.

Wie man in der Fig. 2 erkennen kann, ist bei einigen Ausführungsbeispielen ein Freiraum 62 zwischen der ersten Linsengruppe 40 und der zweiten Linsengruppe 42 vorhanden, der selbst dann bleibt, wenn die zweite Linsengruppe 42 auf einen minimalen Abstand zur ersten Linsengruppe 40 positioniert wurde. In den bevorzugten Ausführungsbeispielen ist ein Strahlteiler 64 in dem Freiraum 62 auf der optischen Achse 50 angeordnet, um wahlweise Licht von einer weiteren Schnittstelle 66 des Objektivs 24 ein- oder auszukoppeln. In den bevorzugten Ausführungsbeispielen ist die zweite Schnittstelle 66 etwa auf Höhe des Strahlteilers 64 am seitlichen Umfang des Objektivkörpers 26 angeordnet.

In ähnlicher Weise ist in einigen Ausführungsbeispielen des Objektivs 24 ein weiterer Freiraum 68, in dem ebenfalls ein Strahlteiler 70 angeordnet ist, zwischen der vierten Linsengruppe 46 und der Lichtaustrittsöffnung 30. Auf Höhe des Strahlteilers 70 befindet sich eine weitere Schnittstelle 72, über die Licht ein- und/oder ausgekoppelt werden kann. In dem dargestellten Ausführungsbeispiel ist der Strahlteiler 70 zwischen der fünften Linsengruppe 48 und der Lichtaustrittsöffnung 30 angeordnet. Alternativ oder ergänzend hierzu könnte der Strahlteiler 70 zwischen der vierten Linsengruppe 46 und der fünften Linsengruppe 48 angeordnet sein, was natürlich einen entsprechenden Freiraum voraussetzt.

In bevorzugten Ausführungsbeispielen besitzt das Objektiv 24 im Bereich der Lichteintrittsöffnung 28 einen Halter 74, an dem verschiedene Lichtquellen 76, 78 angeordnet sind. In dem dargestellten Ausführungsbeispiel trägt der Halter 74 ein Ringlicht mit einer Vielzahl von Lichtquellen 78a, 78b, die rund um den Objektivkörper 26 mit verschiedenen radialen Abständen angeordnet sind. In einigen Ausführungsbeispielen sind die Lichtquellen 78a, 78b in der Lage, verschiedenfarbiges Licht zu erzeugen, etwa weißes Licht, rotes Licht, grünes Licht und blaues Licht sowie Mischungen davon. Die Lichtquellen 78a, 78b können dazu verwendet werden, unterschiedliche Beleuchtungsszenarien in unterschiedlichen Abständen vor der Lichteintrittsöffnung 28 zu erzeugen. Beispielhaft ist bei der Bezugsziffer 80 ein Messobjekt 80 schematisch angedeutet, das in einem Abstand d zu der Lichteintrittsöffnung 28 des Objektivs 24 positioniert ist. Der Abstand d repräsentiert einen Arbeitsabstand zwischen dem Objektiv 24 und dem Messobjekt 80, wobei dieser Arbeitsabstand anhand der Fokussierung des Objektivs 24 variabel einstellbar ist.

Die Lichtquellen 76 sind im vorliegenden Ausführungsbeispiel Lichtquellen, die in den Objektivkörper 26 integriert sind. In einigen Ausführungsbeispielen sind die Lichtquellen 76 außerhalb des Linsensystems in den Objektivkörper 26 integriert, wie dies in Fig. 2 dargestellt ist. In anderen Ausführungsbeispielen (alternativ oder ergänzend) können Lichtquellen 76 so in den Objektivkörper 26 integriert sein, dass das von den Lichtquellen 76 erzeugte Licht zumindest durch einige der Linsengruppen und gegebenenfalls das Deckglas 38 hindurch aus dem Objektivkörper 26 austritt. In diesem Fall ist die Lichteintrittsöffnung 28 gleichzeitig auch eine Lichtaustrittsöffnung.

Mit den Lichtquellen 76, 78 ist es möglich, das Messobjekt 80 variabel zu beleuchten, um wahlweise eine Hellfeld- und/oder eine Dunkelfeldbeleuchtung zu erzeugen. In beiden Fällen handelt es sich um Auflicht, das aus Richtung des Objektivs 24 auf das Messobjekt 80 trifft.

Darüber hinaus besitzt das Koordinatenmessgerät 10 in bevorzugten Ausführungsbeispielen eine weitere Lichtquelle 82, die eine Durchlichtbeleuchtung des Messobjekts 80 ermöglicht. Dementsprechend ist die Lichtquelle 82 unterhalb des Messobjekts 80 bzw. unterhalb der Werkstückaufnahme des Koordinatenmessgerätes 10 angeordnet. In den bevorzugten Ausführungsbeispielen besitzt das Koordinatenmessgerät 10 daher eine Werkstückaufnahme 12, die mit einer Glasplatte versehen ist, um die Durchlichtbeleuchtung zu ermöglichen.

Schließlich besitzt der optische Sensor 18 in diesen Ausführungsbeispielen eine Lichtquelle 84, die hier über einen weiteren Strahlteiler mit der Schnittstelle 72 gekoppelt ist. Die Lichtquelle 84 kann über die Schnittstelle 72 und den Strahlteiler 70 Licht in den gesamten Strahlengang des Objektivs 24 einkoppeln. Das eingekoppelte Licht wird hier über das Linsensystem der ersten bis vierten (fünften) Linsengruppe auf das Messobjekt 80 geworfen. In einigen Ausführungsbeispielen kann die Lichtquelle 84 ein Laserpointer sein, mit dem einzelne Messpunkte an dem Messobjekt 80 gezielt beleuchtet werden können. In anderen Ausführungsbeispielen kann die Lichtquelle 84 ein strukturiertes Lichtmuster, etwa ein Streifenmuster oder Gittermuster, erzeugen, welches über das Linsensystem des Objektivs 24 auf das Messobjekt 80 projiziert wird.

In gleicher Weise können verschiedene Beleuchtungen über die Schnittstelle 66 und prinzipiell auch über die Lichtaustrittsöffnung 30 in den Strahlengang des Objektivs 24 eingekoppelt werden. Beispielhaft ist ein Gitterprojektor bei der Bezugsziffer 86 dargestellt. Der Gitterprojektor erzeugt ein strukturiertes Lichtmuster, das in diesem Ausführungsbeispiel über zwei Strahlteiler und die Schnittstelle 72 in den Strahlengang des Objektivs 24 eingekoppelt wird.

Wie in Fig. 2 dargestellt ist, kann das Objektiv 24 auf verschiedene Weise mit optischen Sensoren kombiniert werden, die alternativ oder ergänzend zu der Kamera 34 zur optischen Vermessung des Messobjekts 80 dienen. Bei dem dargestellten Ausführungsbeispiel ist ein erster konfokaler Weißlichtsensor 88a an die Schnittstelle 66 angekoppelt. Alternativ oder ergänzend kann ein weiterer konfokaler Weißlichtsensor 88b beispielsweise über einen Strahlteiler in den Beleuchtungspfad für die Durchlichtbeleuchtung 82 eingekoppelt werden.

Mit der Bezugsziffer 90 ist ein Autofokussensor bezeichnet, mit dessen Hilfe die Höhenlage des Messobjekts 80 parallel zur optischen Achse 50 anhand einer Bestimmung der Fokuslage ermittelt werden kann. Darüber hinaus ist eine optische Vermessung des Messobjekts 80 mit Hilfe der Kamera 34 und einer geeigneten Bildauswertung möglich, wie dies den einschlägigen Fachleuten auf diesem Gebiet bekannt ist.

Das Objektiv 24 besitzt in den bevorzugten Ausführungsbeispielen aufgrund der verfahrbaren Linsengruppen 42, 44, 46 und der verstellbaren Blende 52 einen großen Einsatzbereich. In den bevorzugten Ausführungsbeispielen ist eine Vielzahl von Steuerkurven 92 in einem Speicher der Auswerte- und Steuereinheit 22 oder einem anderen geeigneten Speicher hinterlegt. Die Vielzahl der Steuerkurven 92 bildet in den bevorzugten Ausführungsbeispielen eine 2D-Kurvenschar, mit deren Hilfe die Vergrößerung und die Fokussierung des Objektivs 24 in zahlreichen frei wählbaren Kombinationen eingestellt werden kann. In dem dargestellten Ausführungsbeispiel kann ein Anwender eine gewünschte Vergrößerung 94 und eine gewünschte Fokussierung 96 in die Auswerte- und Steuereinheit 22 eingeben. Die Auswerte- und Steuereinheit 22 bestimmt mit Hilfe der Steuerkurven 92 und in Abhängigkeit von der gewünschten Vergrößerung 94 und gewünschten Fokussierung 96 individuelle Positionen der zweiten, dritten und vierten Linsengruppe entlang der optischen Achse 50 sowie eine individuelle Position und Öffnung der Blende 52. In einigen Ausführungsbeispielen des neuen Verfahrens kann der Anwender durch Variieren der Fokussierung den Arbeitsabstand d zu einem Messobjekt variieren, ohne dass der Sensor 18 mit Hilfe der Pinole 14 relativ zu dem Messobjekt bewegt werden muss. Beispielsweise ist es so möglich, Strukturen an der Oberfläche eines Messobjekts 80 und Strukturen am Grund einer Bohrung (hier nicht dargestellt) des Messobjekts 80 zu vermessen, indem bei (nahezu) gleichbleibender Vergrößerung lediglich die Fokussierung des Objektivs 24 so variiert wird, dass im einen Fall die Struktur an der Oberfläche des Messobjekts 80 und im anderen Fall die Struktur am Grund der Bohrung in der Fokusebene des Objektivs 24 liegt.

In anderen Varianten kann ein Anwender bei gleichbleibendem oder wechselndem Arbeitsabstand d die Vergrößerung des Objektivs 24 variieren, um beispielsweise Details eines zuvor "aus der Vogelperspektive" vermessenen Messobjekts 80 erneut zu vermessen.

Des Weiteren kann ein Anwender in einigen Ausführungsbeispielen die numerische Apertur des Objektivs 24 durch Öffnen oder Schließen der Blende 52 verändern, um auf diese Weise eine gleichbleibende Auflösung bei unterschiedlichen Arbeitsabständen d zu erreichen. Ferner kann ein Anwender die Vergrößerung, Fokussierung, numerische Apertur einzeln oder in Kombination miteinander variieren, um das Objektiv 24 optimal an die Eigenschaften der verschiedenen Sensoren 36, 88, 90 anzupassen.

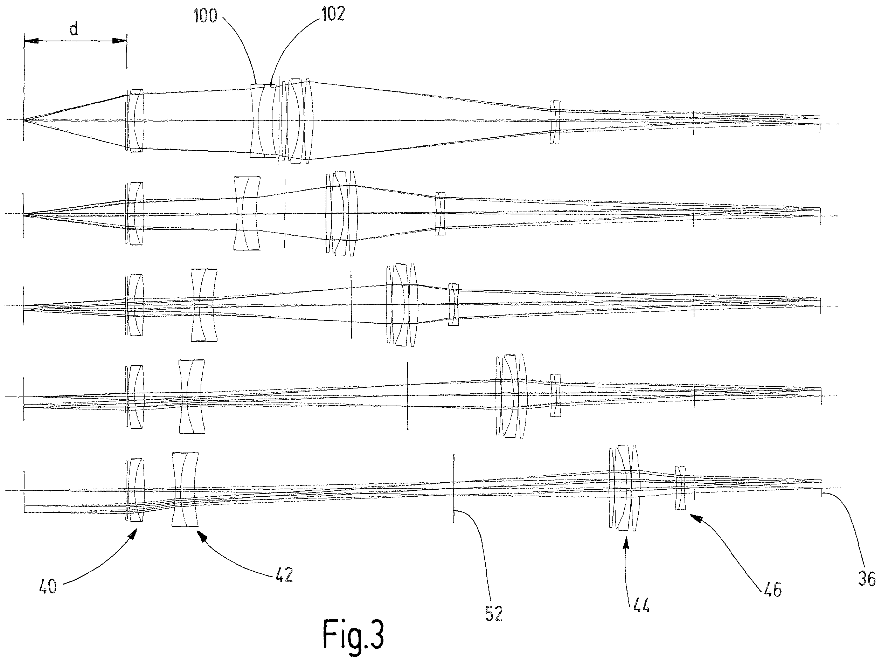

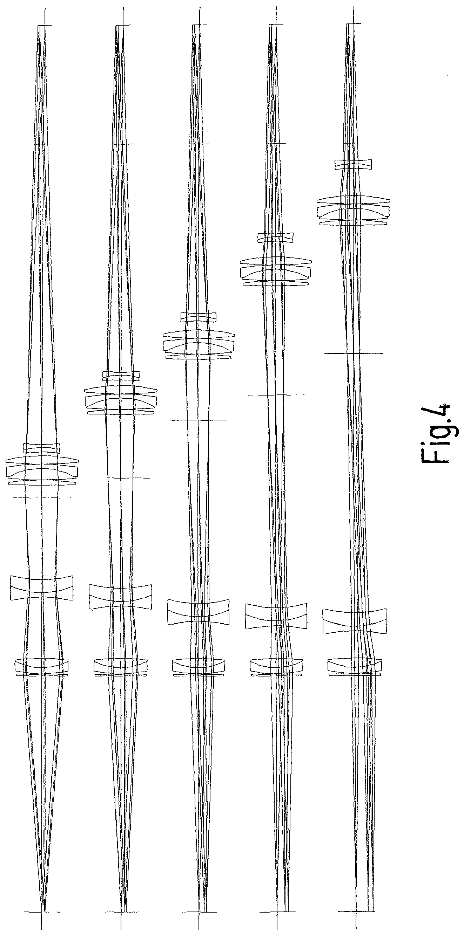

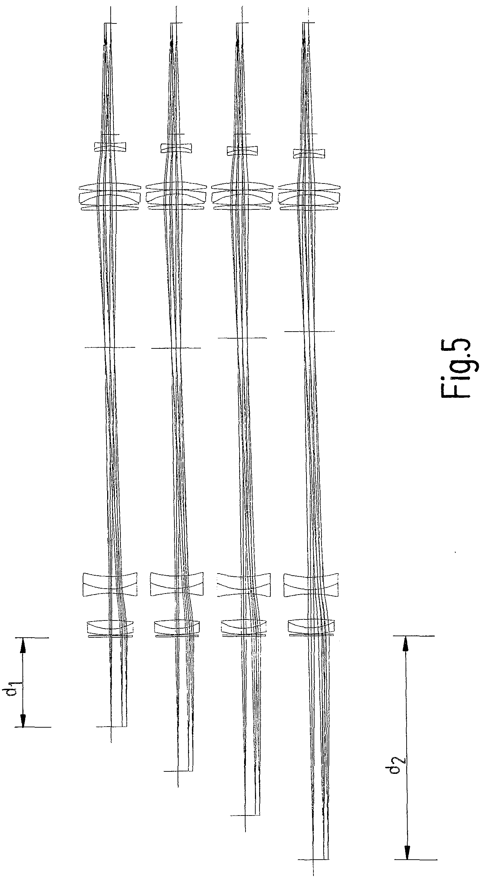

In den Fig. 3 bis 6 sind die Positionen der Linsengruppen 40, 42, 44, 46 und die Position der Blende 52 für verschiedene Arbeitsentfernungen d und verschiedene Vergrößerungen dargestellt. Dabei bezeichnet D1 den Arbeitsabstand entlang der optischen Achse zwischen der ersten Linsengruppe 40 und einer Objektebene, auf die fokussiert ist. D2 bezeichnet den Abstand entlang der optischen Achse zwischen der ersten Linsengruppe 40 und der zweiten Linsengruppe 42. D3 bezeichnet den Abstand entlang der optischen Achse zwischen der zweiten Linsengruppe 42 und der Blende 52. D4 bezeichnet den Abstand entlang der optischen Achse zwischen der Blende 52 und der dritten Linsengruppe 44. D5 bezeichnet den Abstand entlang der optischen Achse zwischen der dritten Linsengruppe 44 und der vierten Linsengruppe 46 und D6 bezeichnet den Abstand entlang der optischen Achse zwischen der vierten Linsengruppe 46 und der Position, an der das für die Messung auszuwertende Bild entsteht.

Wie man anhand der Schnittbilder erkennen kann, besitzt jede Linsengruppe 'hier mehrere Linsen 100, 102, wobei in diesem Ausführungsbeispiel in jeder Linsengruppe zumindest ein Kittglied bestehend aus zumindest zwei Linsen 100, 102 verwendet ist. In einem Ausführungsbeispiel können die Linsen 100, 102 der ersten Linsengruppe mit Hilfe eines Piezoaktors (hier nicht dargestellt) auseinandergeschoben werden, um einen definierten chromatischen Längsfehler zu erzeugen.

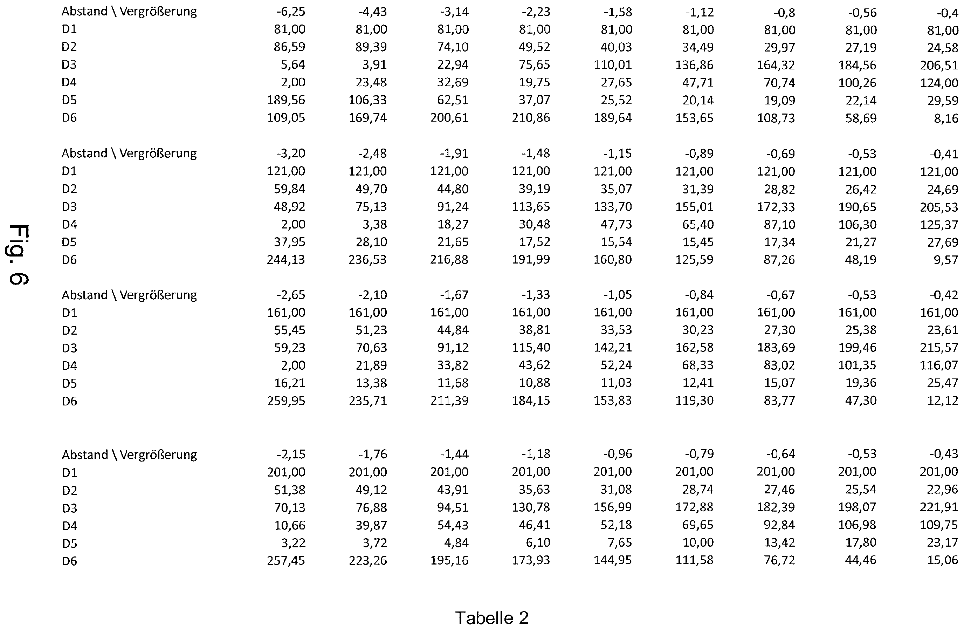

Einige der Linsengruppen besitzen weitere Linsenelemente. Im bevorzugten Ausführungsbeispiel stehen die zweite und dritte Linsengruppe bei einer hohen Vergrößerung nahe beieinander, wobei der tatsächliche Abstand zwischen der zweiten und dritten Linsengruppe zusätzlich vom Arbeitsabstand d abhängt. Wie man anhand Fig. 3 und der Tabelle in Fig. 6 erkennen kann, stehen die zweite und dritte Linsengruppe bei kleinerem Arbeitsabstand d näher zusammen als bei einem größeren Arbeitsabstand. Mit abnehmender Vergrößerung wandern die zweite und dritte Linsengruppe auseinander, wobei sich die zweite Linsengruppe der ersten Linsengruppe annähert. Des Weiteren bewegt sich die Blende in den bevorzugten Ausführungsbeispielen mit abnehmender Vergrößerung von der zweiten Linsengruppe weg. Die Blende und die zweite Linsengruppe bewegen sich in den bevorzugten Ausführungsbeispielen stets gegenläufig zueinander. Ferner variiert der Abstand zwischen der Blende und der dritten Linsengruppe in Abhängigkeit von der gewünschten Vergrößerung und Fokussierung. Und ebenso variiert der Abstand zwischen der dritte und der vierten Linsengruppe. In den bevorzugten Ausführungsbeispielen sind individuelle Steuerkurven, die die Abhängigkeit der jeweiligen Position der verschiebbaren Elemente entlang der optischen Achse von der gewünschten Vergrößerung und Fokussierung repräsentieren, für die zweite, dritte und vierte Linsengruppe und für die Blende in einem Speicher des Koordinatenmessgerätes dauerhaft abgespeichert. Die erste und zweite Linsengruppe fokussieren ein vom Messobjekt entworfenes (virtuelles) Bild vor die Blende 52 und sie erzeugen hier zusammen eine erste Vergrößerung. Die dritte und die vierte Linsengruppe erzeugen eine weitere Vergrößerung. Das Produkt aus der ersten Vergrößerung und der weiteren Vergrößerung ist die Gesamtvergrößerung des Objektivs.

In allen bevorzugten Ausführungsbeispielen wird die Blende 52 jeweils in dem Brennpunkt des aus der ersten und zweiten Linsengruppe gebildeten Teilsystems positioniert. Dies ermöglicht die vorteilhafte Telezentrie sowie eine gute Feldkorrektion mit Hilfe der dritten und vierten Linsengruppe. Die Steuerkurven für die erste und zweite Linsengruppe und die Blende sorgen also vor allem für die vorteilhafte objektseitige Telezentrie und einen Teil der Gesamtvergrößerung. Die Steuerkurven für die dritte und vierte Linsengruppe sorgen für die Fokussierung auf einen gewünschten Arbeitsabstand und für den weiteren Anteil an der Gesamtvergrößerung.

In einem bevorzugten Ausführungsbeispiel sind die Aufgaben der Linsengruppen so verteilt, dass die zweite Linsengruppe in Abhängigkeit vom gewünschten Arbeitsabstand d vor allem den Blendenort der Blende 52 bestimmt, und zwar so, dass die objektseitige Telezentrie erreicht wird. Die Blende 52 wird jeweils in die Brennebene des Linsensystems bestehend aus erster und zweiter Linsengruppe verschoben. Die dritte und vierte Linsengruppe erzeugen die gewünschte Vergrößerung und die Bildlage auf dem Bildsensor der Kamera. Wie man anhand der Fig. 3 bis 6 erkennen kann, variiert der Abstand D4 zwischen der Blende und der dritten Linsengruppe in Abhängigkeit von der gewünschten Vergrößerung und der gewünschten Fokussierung. Die zweite Linsengruppe und die Blende bewegen sich in Abhängigkeit von der gewünschten Vergrößerung und der gewünschten Fokussierung gegenläufig. Im Gegensatz dazu kann sich die dritte Linsengruppe auf die Blende zubewegen oder von der Blende wegbewegen, wenn die Vergrößerung variiert wird, wie man anhand der Tabelle 2 in Fig. 6 erkennen kann. Generell variiert der jeweilige relative Abstand zwischen der ersten, zweiten, dritten und vierten Linsengruppe und der Blende in Abhängigkeit von der gewünschten Vergrößerung und der gewünschten Fokussierung. Kein Paar der verschiebbaren Elemente behält bei einer Verstellung von Vergrößerung oder Fokussierung einen konstanten relativen Abstand bei.

Vorteilhaft bewirken die dritte und die vierte Linsengruppe hier auch eine bildseitige Telezentrie über den überwiegenden Teil des Arbeitsbereichs des neuen Objektivs. Eine vollständige bildseitige Telezentrie über den ganzen Arbeitsbereich des neuen Objektivs lässt sich vorteilhaft mit der optionalen fünften Linsengruppe erreichen.

In einem bevorzugten Ausführungsbeispiel ist ein Messobjekt in einer Entfernung zwischen dem 0,8- bis 2-fachen der Brennweite der Linsengruppe 1 angeordnet. Die erste Linsengruppe besitzt eine positive Brechkraft. Die zweite Linsengruppe besitzt eine negative Brechkraft. Die dritte Linsengruppe besitzt eine positive Brechkraft, und die vierte Linsengruppe wieder eine negative Brechkraft. Die zweite, dritte und vierte Linsengruppe sind jeweils achromatisch korrigiert, während die erste Linsengruppe einen definierten chromatischen Längsfehler erzeugt. In einem anderen Ausführungsbeispiel bilden die erste und die zweite Linsengruppe zusammen ein chromatisch korrigiertes Paar, und die dritte und vierte Linsengruppe bilden zusammen ein chromatisch korrigiertes Paar. In einem weiteren Ausführungsbeispiel sind die Linsengruppen jeweils chromatisch korrigiert oder die chromatische Korrektur ergibt sich erst über alle Linsengruppen zusammen.

Die Blende 52 befindet sich hier jeweils im bildseitigen Brennpunkt des aus der ersten und zweiten Linsengruppe gebildeten Teilsystems. Eine entsprechende Steuerkurve für die axiale Position der Blende 52 gewährleistet die objektseitige Telezentrie. Die Änderung des Blendendurchmessers gestattet eine an die jeweilige Vergrößerung und Objektstruktur angepasste objektseitige Apertur. Das von der ersten und zweiten Linsengruppe entworfene Bild wird von der dritten und vierten Linsengruppe an einen definierten Ort abgebildet, der in einem definierten festen Abstand zu der ersten Linsengruppe angeordnet ist. An diesem definierten Ort befindet sich in den bevorzugten Ausführungsbeispielen der Bildsensor 36.

Die optionale fünfte Linsengruppe transformiert das Bild um einen konstanten Betrag mit einem skalaren Anteil an der Gesamtvergrößerung. Die Gesamtvergrößerung ist in den bevorzugten Ausführungsbeispielen reell ohne Zwischenbild. Die Auslegung des Systems sichert über den Gesamtvergrößerungsbereich eine Austrittspupillenlage bezogen auf das Bild nach der vierten Linsengruppe zwischen der halben und doppelten Entfernung zum Messobjekt. Dies ist vorteilhaft, um auch ohne eine strenge bildseitige Telezentrie Beleuchtungslicht verlustarm in das Objektiv 24 über die Schnittstelle 72 und/oder die Schnittstelle 32 einkoppeln zu können.

Die Brennweite des aus der ersten und zweiten Linsengruppe gebildeten Teilsystems wächst zu größeren Objektfeldern und führt die Blende 52 den in Richtung des Bildsensors 36 wandernden Linsengruppen nach. Dabei sind die Strahlhöhen an der dritten und vierten Linsengruppe aufgrund der Blende begrenzt, was eine gute Gesamtkorrekur der Abbildung ermöglicht. Das Gesamtsystem ist durch die paraxialen Grunddaten Vergrößerung, Fokussierung, Telezentrie und numerische Apertur unterbestimmt. Mit Hilfe der Steuerkurve für die axiale Position der Blende ist es aber möglich, eine ausgewogene Korrektur der Bildfehler über einen großen Verstellbereich der Vergrößerung zu erreichen. In einigen Ausführungsbeispielen ist das Verhältnis zwischen maximaler Vergrößerung und minimaler Vergrößerung größer als 10 und vorzugsweise größer als 15.

In den bevorzugten Ausführungsbeispielen kann das Objektiv 24 chromatische Querfehler aufweisen, um einen einfachen und kostengünstigen Aufbau zu ermöglichen. Dies hat zur Folge, dass Licht und Bilder unterschiedlicher Farben einen geringen Versatz quer zur optischen Achse 50 und eventuell einen leicht unterschiedlichen Abbildungsmaßstab aufweisen können. In bevorzugten Ausführungsbeispielen wird der chromatische Querfehler und/oder Abbildungsmaßstab anhand von mathematischen Korrekturrechnungen korrigiert, was in den bevorzugten Ausführungsbeispielen möglich ist, weil das Fehlerbild als solches stetig ist.

Nachfolgend ist eine Tabelle mit numerischen Daten für ein bevorzugtes Ausführungsbeispiel des neuen Objektivs mit vier Linsengruppen angegeben:

**Tabelle 1**

| | R | D | N | v |
|---|---|---|---|---|
| | | | | |
| 1 | U | | | |
| | | D1 | | |
| 2 | U | | | |
| | | 1,50 | 1,52 | 58,3 |
| 3 | U | | | |
| | | 0,50 | | |
| 4 | 88,48 | | | |
| | | 5,00 | 1,74 | 32,0 |
| 5 | 40,09 | | | |
| | | 8,00 | 1,62 | 63,0 |
| 6 | -147,48 | | | |
| | | D2 | | |
| 7 | -93,05 | | | |
| | | 3,80 | 1,49 | 66,8 |
| 8 | 53,08 | | | |
| | | 11,10 | 1,81 | 25,2 |
| 9 | 79,72 | | | |
| | | D3 | | |
| 10 | U | | | |
| | | D4 | | |
| 11 | 508,47 | | | |
| | | 4,50 | 1,59 | 68,0 |
| 12 | -172,77 | | | |
| | | 0,10 | | |
| 13 | 262,26 | | | |
| | | 10,00 | 1,49 | 81,1 |
| 14 | -47,31 | | | |
| | | 3,50 | 1,75 | 35,1 |
| 15 | -147,48 | | | |
| | | 0,10 | | |
| 16 | 254,82 | | | |
| | | 7,10 | 1,57 | 70,9 |
| 17 | -105,93 | | | |
| | | D5 | | |
| 18 | -81,75 | | | |
| | | 4,00 | 1,67 | 32,0 |
| 19 | -40,09 | | | |
| | | 2,30 | 1,51 | 61,0 |
| 20 | 98,57 | | | |
| | | D6 | | |
| 21 | U | | | |
| | | 100,00 | | |
| 22 | U | | | |

In einigen Ausführungsbeispielen des Objektivs 24 sind der Strahlteiler 70 und das Deckglas 38 so ausgebildet, dass eine polarisationsoptische Unterdrückung von Falschlicht erreicht wird. Dazu ist der Strahlteiler 70 als polarisierender Strahlteiler ausgebildet, und das Deckglas 38 ist eine λ/4-Platte. Auf diese Weise wird Licht, das zum Beispiel durch interne Reflexe im Objektivkörper entsteht, vom Strahlteiler 64 abgelenkt. Nur Licht, das mit Hin- und Rückweg durch die λ/4-Platte gegangen ist, wurde in der Polarisationsrichtung jeweils um 45° gedreht und kann nun den Strahlteiler 70 durch die insgesamt 90° gedrehte Polarisationsrichtung in Richtung der Kamera 34 passieren.

In bevorzugten Ausführungsbeispielen sind Fassungsteile der Linsengruppen geschwärzt, und die Linsengrenzflächen sind mit Antireflexbeschichtungen versehen. Grenzflächen von benachbarten Linsen sind so weit wie möglich verkittet. Die einzelnen Baugruppen sind gewichtsoptimiert, um schnelle Bewegungen der verfahrbaren Linsengruppen und Blende zu ermöglichen.

## Patentansprüche

1. Koordinatenmessgerät zur Bestimmung von Raumkoordinaten an einem Messobjekt, mit einer Werkstückaufnahme (12) zur Aufnahme des Messobjekts (80), mit einem Messkopf (16), der relativ zu der Werkstückaufnahme (12) verfahrbar ist und einen optischen Sensor (18) trägt, und mit einer Auswerte- und Steuereinheit (22), die dazu ausgebildet ist, Raumkoordinaten an dem Messobjekt (80) in Abhängigkeit von einer Position des Messkopfes (16) relativ zu der Werkstückaufnahme und in Abhängigkeit von Sensordaten des optischen Sensors (18) zu bestimmen, wobei der optische Sensor (18) ein Objektiv (24) und eine Kamera (34) beinhaltet, die dazu ausgebildet ist, ein Bild des Messobjekts (80) durch das Objektiv (24) aufzunehmen, wobei das Objektiv (24) einen Objektivkörper (26) aufweist, der eine Lichteintrittsöffnung (28) und eine Lichtaustrittsöffnung (30) mit einer Schnittstelle (32) zum Anschluss der Kamera (34) besitzt, wobei das Objektiv (24) ferner eine Blende (52) und eine Vielzahl von Linsen aufweist, die in dem Objektivkörper (26) angeordnet sind, wobei die Linsen mindestens vier separate Linsengruppen (40-48) bilden, die zusammen eine optische Achse (50) definieren, und wobei mindestens drei der mindestens vier Linsengruppen entlang der optischen Achse (50) verschiebbar sind, wobei eine erste Linsengruppe (40) von den mindestens vier Linsengruppen im Bereich der Lichteintrittsöffnung (28) feststehend angeordnet ist, und wobei die Blende (52) und eine zweite Linsengruppe (42), eine dritte Linsengruppe (44) und eine vierte Linsengruppe (46) von den mindestens vier Linsengruppen jeweils relativ zu der ersten Linsengruppe (40) entlang der optischen Achse (50) individuell verschiebbar sind, wobei die zweite Linsengruppe (42) zwischen der ersten Linsengruppe (40) und der Blende (52) angeordnet ist, und wobei die dritte und die vierte Linsengruppe (44, 46) zwischen der Blende (52) und der Lichtaustrittsöffnung (30) angeordnet sind.

2. Koordinatenmessgerät nach Anspruch 1, **gekennzeichnet durch** einen Speicher, in dem vordefinierte individuelle Steuerkurven (92) für die zweite, dritte und vierte Linsengruppe (42, 44, 46) und die Blende (52) hinterlegt sind, wobei die zweite, dritte und vierte Linsengruppe (42, 44, 46) und die Blende (52) jeweils in Abhängigkeit von den vordefinierten individuellen Steuerkurven (92) entlang der optischen Achse (50) verstellbar sind.

3. Koordinatenmessgerät nach Anspruch 2, **dadurch gekennzeichnet, dass** die vordefinierten individuellen Steuerkurven (92) dazu ausgebildet sind, wahlweise eine variable Vergrößerung (94) bei gleichbleibender Fokussierung auf einen definierten Arbeitsabstand (d) oder eine variable Fokussierung (96) auf verschiedene Arbeitsabstände (d) bei gleichbleibender Vergrößerung zu erzeugen.

4. Koordinatenmessgerät nach einem der Ansprüche 2 oder 3, **dadurch gekennzeichnet, dass** die erste und zweite Linsengruppe (40, 42) zusammen einen Brennpunkt definieren, der zwischen der zweiten und dritten Linsengruppe (42, 44) liegt, wobei die vordefinierten individuellen Steuerkurven (92) für die Blende (52) und die zweite Linsengruppe (42) so aufeinander abgestimmt sind, dass die Blende (52) stets in dem Brennpunkt angeordnet ist.

5. Koordinatenmessgerät nach einem der Ansprüche 1 bis 4, **dadurch gekennzeichnet, dass** die Blende (52) eine variable Blendenöffnung besitzt, die vorzugsweise in Abhängigkeit von einer Position der Blende (52) entlang der optischen Achse (50) variiert.

6. Koordinatenmessgerät nach einem der Ansprüche 1 bis 5, **dadurch gekennzeichnet, dass** das Objektiv (24) eine Vielzahl von Schlitten (54) und motorischen Antrieben (58) aufweist, wobei die zweite, dritte und vierte Linsengruppe (42, 44, 46) und die Blende (52) jeweils mit einem eigenen Schlitten (54) gekoppelt sind, der entlang der optischen Achse (50) verstellbar ist, und wobei die Schlitten (54) mit Hilfe der motorischen Antriebe (58) individuell verfahrbar sind.

7. Koordinatenmessgerät nach einem der Ansprüche 1 bis 6, **dadurch gekennzeichnet, dass** die erste Linsengruppe (40) eine positive Brechkraft besitzt, wobei die zweite Linsengruppe (42) vorzugsweise eine negative Brechkraft besitzt, die dritte Linsengruppe (44) vorzugsweise eine positive Brechkraft besitzt, und die vierte Linsengruppe (46) vorzugsweise eine negative Brechkraft besitzt.

8. Koordinatenmessgerät nach einem der Ansprüche 1 bis 7, **dadurch gekennzeichnet, dass** im Objektivkörper (26) zwischen der ersten und zweiten Linsengruppe (40, 42) ein Strahlteiler (64) angeordnet ist, um wahlweise Licht von einer weiteren Schnittstelle (66) am Objektivkörper (26) ein- und/oder auszukoppeln.

9. Koordinatenmessgerät nach einem der Ansprüche 1 bis 8, **dadurch gekennzeichnet, dass** das Objektiv (24) ein separates Deckglas (38) besitzt, das vor der ersten Linsengruppe (40) im Bereich der Lichteintrittsöffnung (28) angeordnet ist.

10. Koordinatenmessgerät nach einem der Ansprüche 1 bis 9, **dadurch gekennzeichnet, dass** die erste, zweite, dritte und vierte Linsengruppe (40-46) jeweils aus zumindest zwei Linsen (100, 102) bestehen.

11. Koordinatenmessgerät nach einem der Ansprüche 1 bis 10, **dadurch gekennzeichnet, dass** die mindestens vier separaten Linsengruppen genau vier separate Linsengruppen bilden.

12. Koordinatenmessgerät nach einem der Ansprüche 1 bis 10, **dadurch gekennzeichnet, dass** die erste Linsengruppe (40) einen definierten chromatischen Längsfehler erzeugt, der mit Hilfe von zumindest einer weiteren Linsengruppe (42, 44, 46) korrigiert ist.

13. Objektiv für ein optisches Koordinatenmessgerät zur Bestimmung von Raumkoordinaten an einem Messobjekt (80), mit einem Objektivkörper (26), der eine Lichteintrittsöffnung (28) und eine Lichtaustrittsöffnung (30) mit einer Schnittstelle (32) zum Anschluss an eine Kamera (34) aufweist, mit einer Vielzahl von Linsen und mit einer Blende (52), die in dem Objektivkörper (26) angeordnet sind, wobei die Linsen mindestens vier separate Linsengruppen (40-48) bilden, die zusammen eine optische Achse (50) definieren, wobei eine erste Linsengruppe (40) von den mindestens vier Linsengruppen im Bereich der Lichteintrittsöffnung (28) feststehend angeordnet ist, und wobei mindestens drei der mindestens vier Linsengruppen (40-48) entlang der optischen Achse (50) verschiebbar sind, und wobei die Blende (52) und eine zweite Linsengruppe (42), eine dritte Linsengruppe (44) und eine vierte Linsengruppe (46) von den mindestens vier Linsengruppen relativ zu der ersten Linsengruppe (40) entlang der optischen Achse (50) jeweils individuell verschiebbar sind, wobei die zweite Linsengruppe (42) zwischen der ersten Linsengruppe (40) und der Blende (52) angeordnet ist, und wobei die dritte (44) und die vierte Linsengruppe (46) zwischen der Blende (52) und der Lichtaustrittsöffnung (30) angeordnet sind.

14. Verfahren zum Bestimmen von Raumkoordinaten an einem Messobjekt, mit den Schritten:
- Anordnen des Messobjekts (80) auf einer Werkstückaufnahme (12),
- Bereitstellen eines Messkopfes (16), der ein Objektiv (24) und eine Kamera (34) beinhaltet, wobei das Objektiv (24) einen Objektivkörper (26) aufweist, der eine Lichteintrittsöffnung (28) und eine Lichtaustrittsöffnung (30) mit einer Schnittstelle (32) zum Anschluss der Kamera (34) besitzt,
- Positionieren des Messkopfes (16) relativ zu der Werkstückaufnahme (12),
- Aufnehmen von zumindest einem Bild des Messobjekts (80) durch das Objektiv (24), und
- Bestimmen der Raumkoordinaten an dem Messobjekt (80) in Abhängigkeit von der Position des Messkopfes (16) relativ zu der Werkstückaufnahme (12) und in Abhängigkeit von dem Bild,
wobei das Objektiv (24) eine Blende (52) und eine Vielzahl von Linsen aufweist, die in dem Objektivkörper (26) angeordnet sind,
wobei die Linsen mindestens vier separate Linsengruppen (40-48) bilden, die zusammen eine optische Achse (50) definieren,
wobei eine erste Linsengruppe (40) von den mindestens vier Linsengruppen im Bereich der Lichteintrittsöffnung (28) feststehend angeordnet ist, und
wobei mindestens drei der mindestens vier Linsengruppen entlang der optischen Achse (50) verschiebbar sind, wobei die Blende (52) und eine zweite Linsengruppe (42), eine dritte Linsengruppe (44) und eine vierte Linsengruppe (46) von den mindestens vier Linsengruppen jeweils individuell relativ zu der ersten Linsengruppe (40) entlang der optischen Achse (50) verschoben werden, um sowohl eine vordefinierte Vergrößerung (94) als auch eine vordefinierte Fokussierung (96) des Messobjekts (80) in dem Bild zu erreichen, wobei die zweite Linsengruppe (42) zwischen der ersten Linsengruppe (40) und der Blende (52) angeordnet ist, und wobei die dritte und die vierte Linsengruppe (44, 46) zwischen der Blende (52) und der Lichtaustrittsöffnung (30) angeordnet sind.

## Claims

1. Coordinate measuring device for determining spatial coordinates of a measurement object, having a workpiece holder (12) for receiving the measurement object (80), having a measurement head (16), which can be moved relative to the workpiece holder (12) and carries an optical sensor (18), and having an evaluation and control unit (22), which is configured in order to determine spatial coordinates of the measurement object (80) as a function of a position of the measurement head (16) relative to the workpiece holder and as a function of sensor data of the optical sensor (18), wherein the optical sensor (18) contains an objective (24) and a camera (34), which is configured in order to record an image of the measurement object (80) through the objective (24), wherein the objective (24) comprises an objective body (26) which has a light entry opening (28) and a light exit opening (30) with an interface (32) for connection to the camera (34), wherein the objective (24) furthermore comprises a diaphragm (52) and a multiplicity of lenses, which are arranged in the objective body (26), wherein the lenses form at least four separate lens groups (40-48), which together define an optical axis (50), and wherein at least three of the at least four lens groups can be displaced along the optical axis (50), wherein a first lens group (40) of the at least four lens groups is arranged fixed in the region of the light entry opening (28), and wherein the diaphragm (52) and a second lens group (42), a third lens group (44) and a fourth lens group (46) of the at least four lens groups can respectively be displaced individually relative to the first lens group (40) along the optical axis (50), wherein the second lens group (42) is arranged between the first lens group (40) and the diaphragm (52), and wherein the third and fourth lens groups (44, 46) are arranged between the diaphragm (52) and the light exit opening (30) .

2. Coordinate measuring device according to Claim 1, **characterized by** a memory, in which predefined individual control curves (92) for the second, third and fourth lens groups (42, 44, 46) and the diaphragm (52) are stored, wherein the second, third and fourth lens groups (42, 44, 46) and the diaphragm (52) are respectively adjustable as a function of the predefined individual control curves (92) along the optical axis (50) .

3. Coordinate measuring device according to Claim 2, **characterized in that** the predefined individual control curves (92) are configured in order selectively to generate a variable magnification (94) with the same focusing onto a defined working distance (d), or variable focusing (96) onto different working distances (d) with the same magnification.

4. Coordinate measuring device according to one of Claims 2 and 3, **characterized in that** the first and second lens groups (40, 42) together define a focal point which lies between the second and third lens groups (42, 44), wherein the predefined individual control curves (92) for the diaphragm (52) and the second lens group (42) are adapted to one another in such a way that the diaphragm (52) is always arranged at the focal point.

5. Coordinate measuring device according to one of Claims 1 to 4, **characterized in that** the diaphragm (52) has a variable diaphragm aperture, which preferably varies as a function of a position of the diaphragm (52) along the optical axis (50).

6. Coordinate measuring device according to one of Claims 1 to 5, **characterized in that** the objective (24) comprises a multiplicity of carriages (54) and motor drives (58), wherein the second, third and fourth lens groups (42, 44, 46) and the diaphragm (52) are respectively coupled to their own carriage (54), which is adjustable along the optical axis (50), and wherein the carriages (54) can be moved individually with the aid of the motor drives (58).

7. Coordinate measuring device according to one of Claims 1 to 6, **characterized in that** the first lens group (40) has a positive refractive power, wherein the second lens group (42) preferably has a negative refractive power, the third lens group (44) preferably has a positive refractive power, and the fourth lens group (46) preferably has a negative refractive power.

8. Coordinate measuring device according to one of Claims 1 to 7, **characterized in that** a beam splitter (64) is arranged in the objective body (26) between the first and second lens groups (40, 42), in order to selectively input and/or output light from a further interface (66) on the objective body (26).

9. Coordinate measuring device according to one of Claims 1 to 8, **characterized in that** the objective (24) has a separate cover glass (38), which is arranged before the first lens group (40) in the region of the light entry opening (28).

10. Coordinate measuring device according to one of Claims 1 to 9, **characterized in that** the first, second, third and fourth lens groups (40-46) respectively consist of at least two lenses (100, 102).

11. Coordinate measuring device according to one of Claims 1 to 10, **characterized in that** the at least four separate lens groups form precisely four separate lens groups.

12. Coordinate measuring device according to one of Claims 1 to 10, **characterized in that** the first lens group (40) generates a defined longitudinal chromatic aberration, which is corrected with the aid of at least one further lens group (42, 44, 46).

13. Objective for an optical coordinate measuring device for determining spatial coordinates of a measurement object (80), having an objective body (26) which has a light entry opening (28) and a light exit opening (30) with an interface (32) for connection to a camera (34), having a multiplicity of lenses and having a diaphragm (52), which are arranged in the objective body (26), wherein the lenses form at least four separate lens groups (40-48), which together define an optical axis (50), wherein a first lens group (40) of the at least four lens groups is arranged fixed in the region of the light entry opening (28), and wherein at least three of the at least four lens groups (40-48) can be displaced along the optical axis (50), and wherein the diaphragm (52) and a second lens group (42), a third lens group (44) and a fourth lens group (46) of the at least four lens groups can respectively be displaced individually relative to the first lens group (40) along the optical axis (50), wherein the second lens group (42) is arranged between the first lens group (40) and the diaphragm (52), and wherein the third (44) and the fourth (46) lens groups are arranged between the diaphragm (52) and the light exit opening (30) .

14. Method for determining spatial coordinates of a measurement object, having the steps:
- arranging the measurement object (80) on a workpiece holder (12),
- providing a measurement head (16), which comprises an objective (24) and a camera (34), wherein the objective (24) comprises an objective body (26) which has a light entry opening (28) and a light exit opening (30) with an interface (32) for connection to the camera (34),
- positioning the measurement head (16) relative to the workpiece holder (12),
- recording at least one image of the measurement object (80) by the objective (24), and
- determining the spatial coordinates of the measurement object (80) as a function of the position of the measurement head (16) relative to the workpiece holder (12) and as a function of the image,
wherein the objective (24) comprises a diaphragm (52) and a multiplicity of lenses, which are arranged in the objective body (26),
wherein the lenses form at least four separate lens groups (40-48), which together define an optical axis (50),
wherein a first lens group (40) of the at least four lens groups is arranged fixed in the region of the light entry opening (28), and
wherein at least three of the at least four lens groups can be displaced along the optical axis (50), wherein the diaphragm (52) and a second lens group (42), a third lens group (44) and a fourth lens group (46) of the at least four lens groups are respectively displaced individually relative to the first lens group (40) along the optical axis (50), in order to achieve both a predefined magnification (94) and predefined focusing (96) of the measurement object (80) in the image, wherein the second lens group (42) is arranged between the first lens group (40) and the diaphragm (52), and wherein the third and fourth lens groups (44, 46) are arranged between the diaphragm (52) and the light exit opening (30).

## Revendications

1. Appareil de mesure de coordonnées destiné à déterminer les coordonnées spatiales sur un objet mesuré, comprenant un logement de pièce (12) destiné à accueillir l'objet mesuré (80), comprenant une tête de mesure (16), qui peut être déplacée par rapport au logement de pièce (12) et qui comporte un capteur optique (18), et comprenant une unité d'évaluation et de commande (22), qui est configurée pour déterminer des coordonnées spatiales sur l'objet mesuré (80) en fonction d'une position de la tête de mesure (16) par rapport au logement de pièce et en fonction de données de capteur du capteur optique (18), le capteur optique (18) incluant un objectif (24) et une caméra (34) qui est configurée pour enregistrer une image de l'objet mesuré (80) à travers l'objectif (24), l'objectif (24) possédant un corps d'objectif (26), lequel possède une ouverture d'entrée de lumière (28) et une ouverture de sortie de lumière (30) avec une interface (32) servant au raccordement de la caméra (34), l'objectif (24) possédant en outre un obturateur (52) et une pluralité de lentilles qui sont disposés dans le corps d'objectif (26), les lentilles formant au moins quatre groupes de lentilles (40-48) séparés qui définissent ensemble un axe optique (50), et au moins trois des au moins quatre groupes de lentilles pouvant être déplacés le long de l'axe optique (50), un premier groupe de lentilles (40) des au moins quatre groupes de lentilles étant disposé en position fixe dans la zone de l'ouverture d'entrée de lumière (28) et l'obturateur (52) et un deuxième groupe de lentilles (42), un troisième groupe de lentilles (44) et un quatrième groupe de lentilles (46) des au moins quatre groupes de lentilles pouvant être déplacés individuellement le long de l'axe optique (50) respectivement par rapport au premier groupe de lentilles (40), le deuxième groupe de lentilles (42) étant disposé entre le premier groupe de lentilles (40) et l'obturateur (52), les troisième et quatrième groupes de lentilles (44, 46) étant disposés entre l'obturateur (52) et l'ouverture de sortie de lumière (30) .

2. Appareil de mesure de coordonnées selon la revendication 1, **caractérisé par** une mémoire dans laquelle sont stockées des courbes de commande (92) individuelles prédéfinies pour les deuxième, troisième et quatrième groupes de lentilles (42, 44, 46) et pour l'obturateur (52), les deuxième, troisième et quatrième groupes de lentilles (42, 44, 46) et l'obturateur (52) pouvant être positionnés le long de l'axe optique (50) respectivement en fonction des courbes de commande (92) individuelles prédéfinies.

3. Appareil de mesure de coordonnées selon la revendication 2, **caractérisé en ce que** les courbes de commande (92) individuelles prédéfinies sont configurées pour générer, au choix, un grossissement variable (94) avec une mise au point constante sur une distance de travail (d) définie ou une mise au point variable (96) sur différentes distances de travail (d) avec un grossissement constant.

4. Appareil de mesure de coordonnées selon l'une des revendications 2 ou 3, **caractérisé en ce que** les premier et deuxième groupes de lentilles (40, 42) définissent ensemble un foyer qui se trouve entre les deuxième et troisième groupes de lentilles (42, 44), les courbes de commande (92) individuelles prédéfinies pour l'obturateur (52) et le deuxième groupe de lentilles (42) étant accordées l'une sur l'autre de telle sorte que l'obturateur (52) est toujours disposé dans le foyer.

5. Appareil de mesure de coordonnées selon l'une des revendications 1 à 4, **caractérisé en ce que** l'obturateur (52) possède une ouverture d'obturateur variable qui varie de préférence en fonction d'une position de l'obturateur (52) le long de l'axe optique (50) .

6. Appareil de mesure de coordonnées selon l'une des revendications 1 à 5, **caractérisé en ce que** l'objectif (24) possède une pluralité de coulisseaux (54) et de mécanismes d'entraînement motorisés (58), les deuxième, troisième et quatrième groupes de lentilles (42, 44, 46) et l'obturateur (52) étant respectivement couplés à un coulisseau (54) propre qui peut être positionné le long de l'axe optique (50), les coulisseaux (54) pouvant être déplacés individuellement à l'aide des mécanismes d'entraînement motorisés (58).

7. Appareil de mesure de coordonnées selon l'une des revendications 1 à 6, **caractérisé en ce que** le premier groupe de lentilles (40) possède un pouvoir réfringent positif, le deuxième groupe de lentilles (42) possédant de préférence un pouvoir réfringent négatif, le troisième groupe de lentilles (44) possédant de préférence un pouvoir réfringent positif et le quatrième groupe de lentilles (46) possédant de préférence un pouvoir réfringent négatif.

8. Appareil de mesure de coordonnées selon l'une des revendications 1 à 7, **caractérisé en ce qu'**un séparateur de faisceaux (64) est disposé dans le corps d'objectif (26) entre les premier et deuxième groupes de lentilles (40, 42) afin d'injecter et/ou découpler, au choix, la lumière d'une interface supplémentaire (66) au niveau du corps d'objectif (26).

9. Appareil de mesure de coordonnées selon l'une des revendications 1 à 8, **caractérisé en ce que** l'objectif (24) possède verre un couvre-objet (38) séparé qui est disposé devant le premier groupe de lentilles (40) dans la zone de l'ouverture d'entrée de lumière (28).

10. Appareil de mesure de coordonnées selon l'une des revendications 1 à 9, **caractérisé en ce que** les premier, deuxième, troisième et quatrième groupes de lentilles (40-46) se composent respectivement d'au moins deux lentilles (100, 102).

11. Appareil de mesure de coordonnées selon l'une des revendications 1 à 10, **caractérisé en ce que** les au moins quatre groupes de lentilles séparés forment exactement quatre groupes de lentilles séparés.

12. Appareil de mesure de coordonnées selon l'une des revendications 1 à 10, **caractérisé en ce que** le premier groupe de lentilles (40) génère un défaut longitudinal chromatique défini qui est corrigé à l'aide d'au moins un groupe de lentilles supplémentaire (42, 44, 46).

13. Objectif pour un appareil de mesure de coordonnées optique destiné à déterminer les coordonnées spatiales sur un objet mesuré (80), comprenant un corps d'objectif (26), lequel possède une ouverture d'entrée de lumière (28) et une ouverture de sortie de lumière (30) avec une interface (32) servant au raccordement à une caméra (34), comprenant une pluralité de lentilles et comprenant un obturateur (52) qui sont disposés dans le corps d'objectif (26), les lentilles formant au moins quatre groupes de lentilles (40-48) séparés qui définissent ensemble un axe optique (50), un premier groupe de lentilles (40) des au moins quatre groupes de lentilles étant disposé en position fixe dans la zone de l'ouverture d'entrée de lumière (28), et au moins trois des au moins quatre groupes de lentilles (40-48) pouvant être déplacés le long de l'axe optique (50), et l'obturateur (52) et un deuxième groupe de lentilles (42), un troisième groupe de lentilles (44) et un quatrième groupe de lentilles (46) des au moins quatre groupes de lentilles pouvant être déplacés individuellement respectivement le long de l'axe optique (50) par rapport au premier groupe de lentilles (40), le deuxième groupe de lentilles (42) étant disposé entre le premier groupe de lentilles (40) et l'obturateur (52), et les troisième et quatrième groupes de lentilles (44, 46) étant disposés entre l'obturateur (52) et l'ouverture de sortie de lumière (30) .

14. Procédé de détermination de coordonnées spatiales sur un objet mesuré, comprenant les étapes suivantes :
- arrangement de l'objet mesuré (80) sur un logement de pièce (12),
- fourniture d'une tête de mesure (16), qui contient un objectif (24) et une caméra (34), l'objectif (24) possédant un corps d'objectif (26), lequel possède une ouverture d'entrée de lumière (28) et une ouverture de sortie de lumière (30) avec une interface (32) servant au raccordement de la caméra (34)
- positionnement de la tête de mesure (16) par rapport au logement de pièce (12),
- enregistrement d'au moins une image de l'objet mesuré (80) à travers l'objectif (24), et
- détermination des coordonnées spatiales sur l'objet mesuré (80) en fonction de la position de la tête de mesure (16) par rapport au logement de pièce (12) et en fonction de l'image,
l'objectif (24) possédant un obturateur (52) et une pluralité de lentilles qui sont disposés dans le corps d'objectif (26),
les lentilles formant au moins quatre groupes de lentilles (40-48) séparés qui définissent ensemble un axe optique (50),
un premier groupe de lentilles (40) des au moins quatre groupes de lentilles étant disposé en position fixe dans la zone de l'ouverture d'entrée de lumière (28) au moins trois des au moins quatre groupes de lentilles pouvant être déplacés le long de l'axe optique (50), l'obturateur (52) et un deuxième groupe de lentilles (42), un troisième groupe de lentilles (44) et un quatrième groupe de lentilles (46) des au moins quatre groupes de lentilles pouvant être déplacés individuellement le long de l'axe optique (50) respectivement par rapport au premier groupe de lentilles (40), afin d'atteindre à la fois un grossissement prédéfini (94) et une mise au point prédéfinie (96) de l'objet mesuré (80) dans l'image, le deuxième groupe de lentilles (42) étant disposé entre le premier groupe de lentilles (40) et l'obturateur (52), les troisième et quatrième groupes de lentilles (44, 46) étant disposés entre l'obturateur (52) et l'ouverture de sortie de lumière (30).
